# EUROPEAN PATENT APPLICATION

(11) **EP 1 557 824 A1**
(43) Date of publication of application: **27.07.2005**
(21) Application number: 05100357.2
(22) Date of filing: 20.01.2005
(51) Int. Cl.: G10L 15/22, G06F 17/20

(54) **System and method to disambiguate user's intention in a spoken dialog system**

(30) Priority: 22.01.2004 US 763085
(71) Applicant: AT&T Corp., New York, NY 10013-2412 (US)
(72) Inventor: Di Fabbrizio, Giuseppe, Florham Park, NJ 07932 (US); Lewis, Charles, Alfred, New York, NY 10003 (US)
(74) Representative: Harding, Richard Patrick

(57) **Abstract**

A system and method are disclosed for controlling the flow of a dialog within a spoken dialog service dialog management module. The method uses a dialog disambiguation rooted tree, the rooted tree having a root node, nodes descending from the root nodes organized in categories and leaf nodes. The method comprises gathering input from a user to match with at least one node and node condition, wherein a first prompt from the dialog manager relates to a focus root node, lighting at least one relevant node according to the received user input, generalizing by attempting to select a new focus node further from a current focus node by: (1) assigning a node as a new focus node if it is the only lit direct descendent of a focus node after the lighting step; and (2) assigning a lowest common ancestor node as a new focus node if there are multiple descendent nodes that are lit and the step of assigning a new node a new focus if it is the only lit direct descendent does not apply. This method enables improved disambiguation of user intent in a spoken dialog service.

## Description

### BACKGROUND OF THE INVENTION

### 1. Field of the Invention

The present invention relates to spoken dialog systems and more specifically to a system and method of disambiguating user intentions from user speech.

### 2. Introduction

The present invention relates to spoken dialog systems and to the dialog manager module within such a system. The dialog manager controls the interactive strategy and flow once the semantic meaning of the user query is extracted. There are a variety of techniques for handling dialog management. Several examples may be found in Huang, Acero and Hon, Spoken Language Processing, A Guide to Theory, Algorithm and System Development, Prentice Hall PTR (2001), pages 886 - 918. Recent advances in large vocabulary speech recognition and natural language understanding have made the dialog manager component complex and difficult to maintain. Often, existing specifications and industry standards such as Voice XML and SALT (Speech Application Language Tags) have difficulty with more complex speech applications. SALT is a small set of XML elements, with associated attributes and DOM object properties, events, and methods, which may be used in conjunction with a source markup document to apply a speech interface to the source page. The SALT formalism and semantics are independent of the nature of the source document, so SALT can be used within HTML and all its flavors, or with WML (Wireless Markup Language), or with any other SGML-derived markup.

Given the improved ability of large vocabulary speech recognition systems and natural language understanding capabilities, what is needed in the art is a system and method that provides a correspondingly successfully approach to complex speech interactions with the user. Further what is needed is a compact and convenient representation of the problem which is easy to apply to real services and applications. Such an approach will enable speech interaction in scenarios where a large number of user inputs are expected and where the complexity of the dialog is too large to be managed with traditional techniques.

### SUMMARY OF THE INVENTION

Additional features and advantages of the invention will be set forth in the description which follows, and in part will be obvious from the description, or may be learned by practice of the invention. The features and advantages of the invention may be realized and obtained by means of the instruments and combinations particularly pointed out in the appended claims. These and other features of the present invention will become more fully apparent from the following description and appended claims, or may be learned by the practice of the invention as set forth herein.

According to an exemplary embodiment of the invention, a disambiguation method in a spoken dialog service is used to identify a user need or the user intent. The method assumes that the user utterance, either the user's voice translated to text by an advanced speech recognizer (ASR) or entered directly as text using a keyboard or other device, is then semantically classified by a natural language understanding (NLU) module that generates a minimum meaning representation which expresses the user's intentions.

The disambiguation method is associated with a rooted tree, and comprises (a) prompting the user (either via speech or text) to provide a response related to a root node of a rooted tree; (b) based on a received user utterance in response to a prompt, establishing at least one lit node and assigning a current focus node; (c) if there is a single direct descendent of the focus node that is lit: (1) assigning the lit direct descendent of the current focus node as a new focus node; (2) if the new focus node is a leaf node, identifying the user need; and (3) if the new focus node is not a leaf node, prompting the user to disambiguate between descendent nodes of the new focus node and returning to step (b); (d) if there is not a single direct descendent of the current focus node that is lit:
(1) assigning a lowest common ancestor node of all lit nodes as a new focus node; (2) prompting the user for input to disambiguate between descendent nodes of the new focus node; (3) returning to step (b).

Other embodiments of the invention include a system practicing the invention as well as a computer-readable medium storing instructions for practicing the method as set forth herein.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:

FIG. 1 illustrates the basic spoken dialog service;

FIG. 2A illustrates a flow control tree according to an exemplary embodiment of the invention;

FIG. 2B illustrates a branch of the flow control tree of FIG. 2A;

FIG. 2C illustrates another branch of the flow control tree of FIG. 2A; and

FIG. 3 illustrates a method according to an aspect of the present invention.

### DETAILED DESCRIPTION OF THE INVENTION

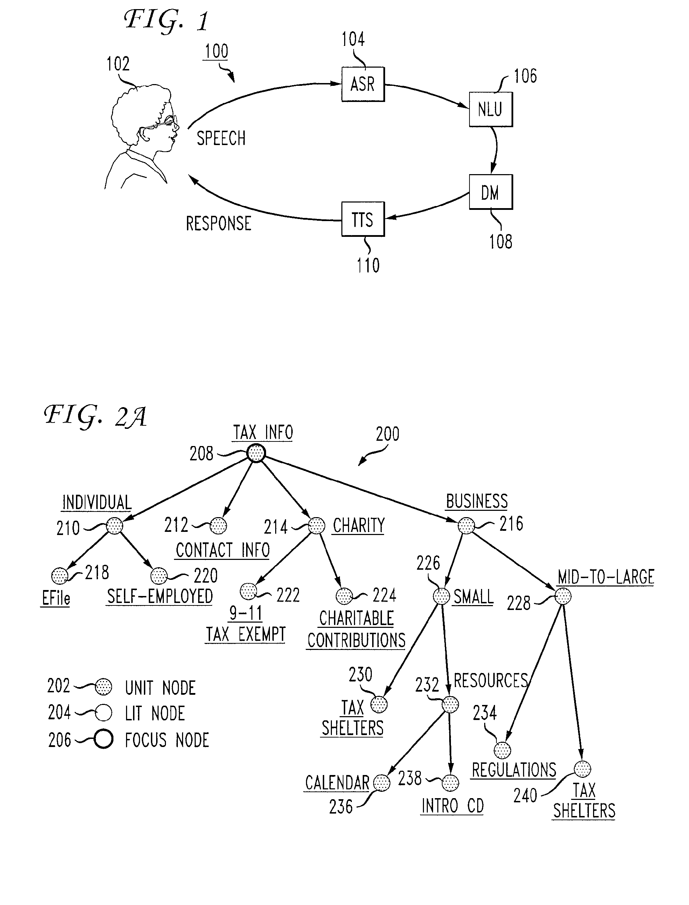

FIG. 1 provides the basic modules that are used in a spoken dialog system 100. A user 102 that is interacting with the system will speak a question or statement. An automatic speech recognition (ASR) module 104 will receive and process the sound from the speech. The speech is recognized and converted into text. The text is transmitted to a natural language understanding (NLU) module 106 that determines the intent or purpose of the speech. A dialog management (DM) module 108 processes the received intent or purpose of the user's speech and generates an appropriate response. Typically, the response is generated in text which is transmitted to a text-to-speech module 110 that synthesizes audible speech that the user 102 receives and hears. The present invention relates to the DM module 108.

The DM 108 is responsible for making decisions about how the system should respond to user input within the context of an ongoing dialog. This involves interpretation as well as decision. The DM 108 interprets what task the caller wants performed and determines whether there is a clear single, unambiguous task the caller is requesting. If no single task is identifiable, the DM 108 determines actions that can be taken to resolve the ambiguity. The present invention provides a method to disambiguate and clarify user intentions in a mixed-initiative dialog system.

The method provides a concise tree representation of the topics or call types (CT) that may occur during the course of the dialogue and the actions the dialog strategy may use to clarify the user input. It is assumed that the input to the DM 108 from the NLU module 106 is a categorization of the user request in a list of possible CTs. The input to the DM 108 is typically also associated with some kind of confidence score. FIG. 2A illustrates the decision tree 200 and the process according to the present invention. Each node in the tree can be either a concrete or a vague subject of the discourse. Moreover, an arbitrary number of intermediate CT can be added to the tree to introduce partial categorization for specific nodes. Typically the leaves of the tree represent specific (concrete) requests and the intermediate nodes are partial or incomplete (vague) requests. At any time, the method has one node as the "focus" node 206. This is initially the root of the tree 208, and gradually moves down the tree until a fully realized CT is the focus. There are two phases to this method of moving the focus. The first phase involves gathering input from a user to match with at least one node and node condition. Each node has a table of prompts to provide guidance when that node is the focus. After the prompt is played, this phase takes the possible user input call types or intentions and uses them to meet the conditions of as many nodes as possible, both intermediate nodes that are vague or incomplete, and leaf nodes which represent fully described CTs. The second phase is to generalize: this moves the focus further from the root of the tree.

The following rules are applied repeatedly until the focus node no longer changes: 1) The focus node and nodes which are not descendents of the focus node are not eligible as selected nodes; 2) if one direct descendent of the focus is selected, it is made the new focus; and 3) else, find the lowest node which is a common ancestor of all selected nodes and set it as the focus.

FIG. 2A further shows a "lit" node 204 which represents a node when a user input suggests that it is relevant to the final choice of nodes. A unit node 202 represents other nodes in the tree 200. The nodes represented in the tree 200 of FIG. 2A are provided as an example application. Of course, other applications are envisioned but the tax information decision tree is shown by way of example only. The root node in FIG. 2A is the tax information node 208. The tax information can be either related to an individual 210, a leaf node of contact information 212, charity information 214 or business related information 216. Under the individual node 210, the information may be related to the leaf nodes of electronic filing 218 or for the self-employed 220. Under the charity node 214, the information can be either the leaf node of 9-11 tax exemptions 222 and the leaf node of charitable contributes 224. Under the business node 216, the options may be small businesses 226 or mid-to-large sized businesses 228. Under the small business node 226 is the leaf nodes of tax shelters 230 and resources 232. Under the resources node 232 are a leaf node, the calendar node 236 and a leaf node, the introduction CD 238. Under the mid-to-large 228 node the leaf nodes include regulations 234 and tax shelter 240 nodes.

The tax information example provides a context to describe the design for a dialog manager to discern the specific needs of a user from a large field of possibilities. It is intended to help out with the IRS application specifically, but will apply to any situation where a spoken dialog service, such as the AT&T VoiceTone™ Natural Language services, needs to discern how to route a call.

In general, the condition to light a node is not limited to the presence of call types in the NLU processing result, but it can be combined with any Boolean expression. A condition to light a node can be arbitrarily complex and refer to state variables associated to the local context during execution. For example, the logical rule enclosed in the <conditions> tags below could be associated to a specific node as lit condition:

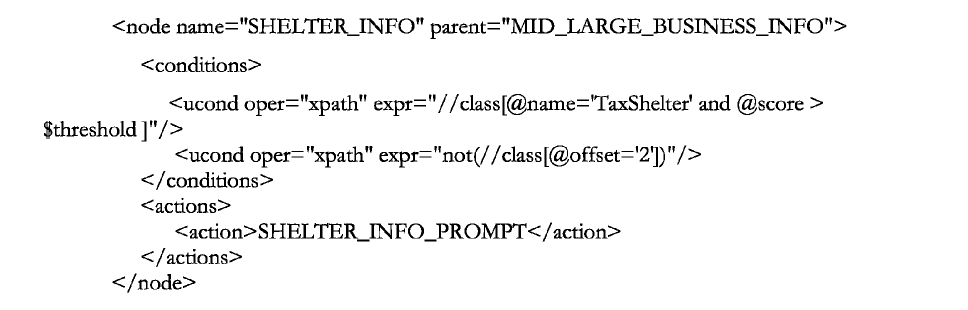

The specific implementation in the example assumes that the NLU is generating results in the XML document format and the conditions are XPath expressions (http://www.w3.org/TR/xpath). The conditions above can then be read as: light the node if the TaxShelter intention is returned by the NLU with confidence greater than $threshold, where $threshold is a predefined value in the local context, and TaxShelter is the only intention present. If the condition is true, the node is lit and the action is taken according the algorithm previously described. The value of the tag <action>, SHELTER_INFO_PROMPT, is a reference to a predefined system prompts which is rendered when the focus is on the node, for example:
<actiondef name="SHELTER_INFO_PROMPT"> The Internal Revenue Service has a comprehensive strategy in place to combat abusive tax shelters and transactions. Please, stay on line and the next available agent will provide more details about published guidance, regulations or court cases. </actiondef>.

This disambiguation algorithm will be able to use prompts generated from templates as well as prompts that are tailored to specific situations. It will also be capable of rotating through a series of prompts to eliminate repetitiveness (this could be done using counters that keep track of already played prompts). It will be much less complicated than other dialog management techniques to author, since the algorithm for the situation will be built into the disambiguation interpreter itself.

The central data structure of the Disambiguation algorithm is a rooted tree where the leaves represent a successful classification of the user's needs and each internal node represents a choice of categories. The dialog author will create this tree and the prompts used as the tree as traversed. The key concepts include (1) the focus node 206: the node that represents the current state of the inquisition; and (2) the lit node: a node is 'lit' when the user input suggests that it is relevant to the final choice. These both apply to a node in the tree. There are at least some other node properties: conditions: the triggering conditions associated with the node and its descendents; prompt: roughly, the prompt used to choose between descendents of the node. Some transitions have only one property of "cut". This property defaults to false, but becomes true if the branch is specifically ruled out.

The method according to an aspect of the present invention will traverse the tree using several actions. For example, a "gather input" action looks for input to match to node categories or conditions of that node, such as speech category. Relevant nodes are lit up. A "generalize" action attempts to select a new focus which is further from the root.

Each node will also have a set of conditions associated with prompts to provide guidance in context. A context shift table can be used to make major shifts in the focus, if the user quits for example. Subdialogs may be utilized as necessary.

Regarding the generalization action, this is where other steps occur as well. Between gathering input, the method applies the algorithm repeatedly until the focus node no longer changes. The rules of the generalization action are: 1) the focus node, nodes which are not descendents of the focus node, and nodes which are descended from the focus node through cut branches are not eligible as lit nodes, even if the node 'lit' property is true; 2) if one direct descendent of the focus is lit, select it; and 3) else, find the lowest node which is a common ancestor of all lit nodes and sets it as the focus.

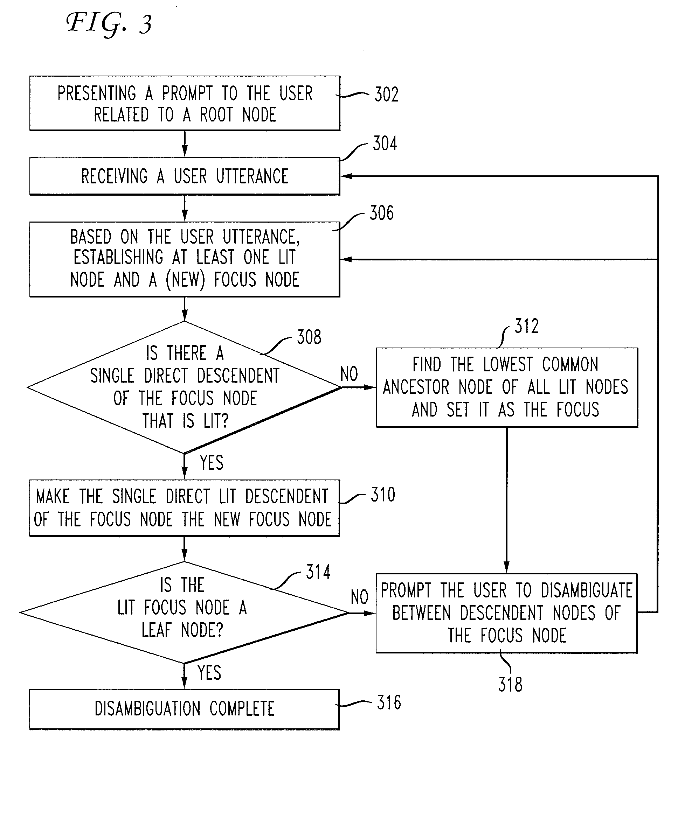

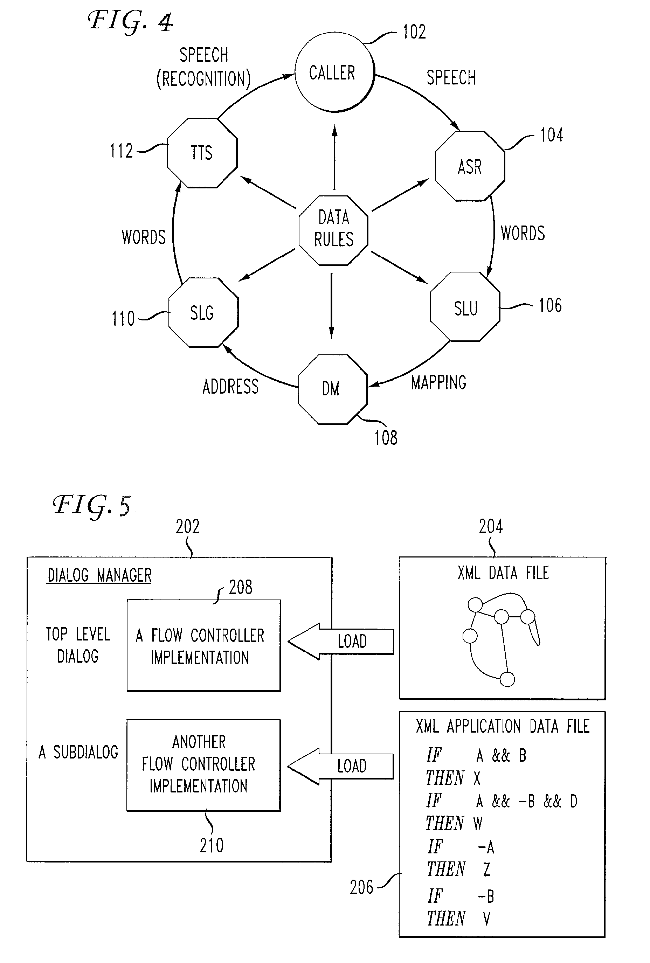

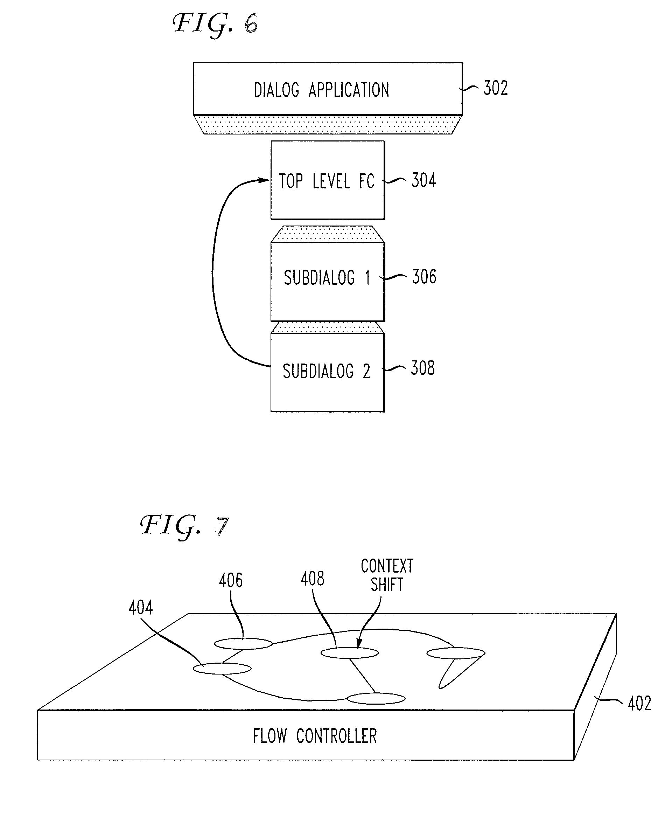

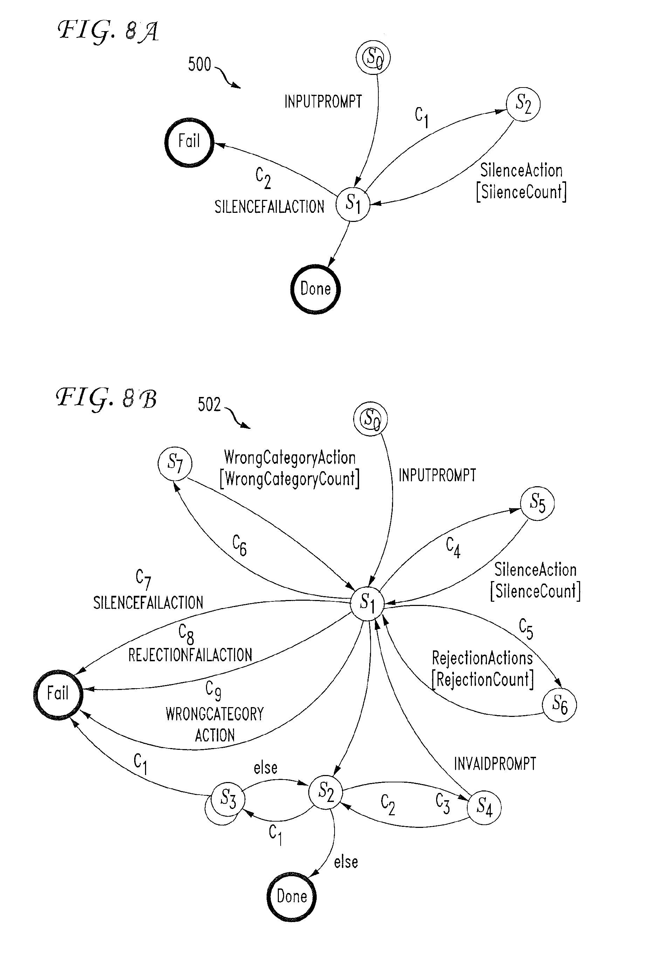

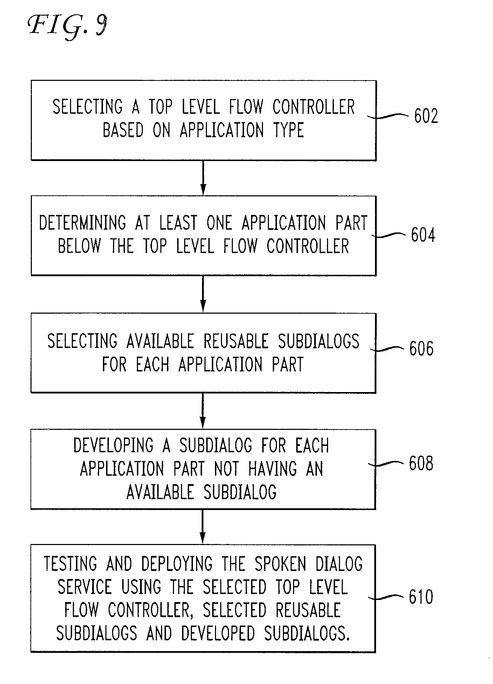

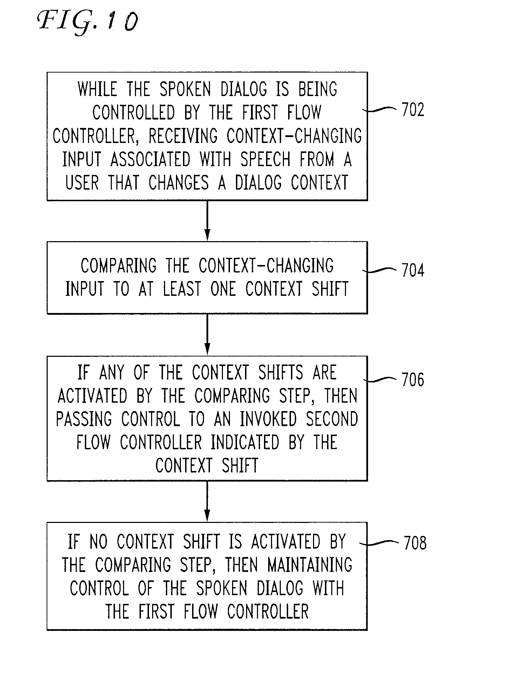

Several examples provide further insight into the operation of the invention. The following simple example demonstrates the process of guiding the user to what they want. Each node has one or more ways of prompting the user to choose one of its children. The "Tax Info" 208 node is the focus when the exchange starts. FIG. 3 provides a flow diagram of example steps that occur when practicing the method of the invention. The following example will refer to both FIG. 3 and FIGS. 2A-C. First, the system presents a prompt to the user for information related to the root node (302). For example, the system may say: "This is the IRS help system. What can I do for you?". The user responds (304) with a request utterance such as: "I need Tax Information." The phrase "Tax Information" would light up the root node 208, but would not change the focus (306). Step (306) in FIG. 3 states that a focus node is established. This may be a new focus node or it may not change the focus node. In the tax example, since it was the first time through the algorithm, the root node remains the root node.

Based on the user utterance and the focus node or newly assigned focus node, the algorithm determines whether there is a single direct descendent of the focus node that is lit (308). If yes, then the single direct lit descendent of the focus node becomes the new focus node (310). If the answer is no, then the method finds the lowest common ancestor node of all lit nodes and sets it as the focus node (312).

Returning to the method of FIG. 3 and the tax example, the Tax Info node 208 would then have to try a different prompt. The system then prompts the user to select from the nodes 210, 212, 214 or 216 as follows: "I can help you with contact info, individual returns, business returns, or charitable organization returns." This prompt relates to step (318) which asks the user the question to disambiguate between descendent nodes of the focus node. Receiving a user response to the prompt (318) as follows: "Individual returns."

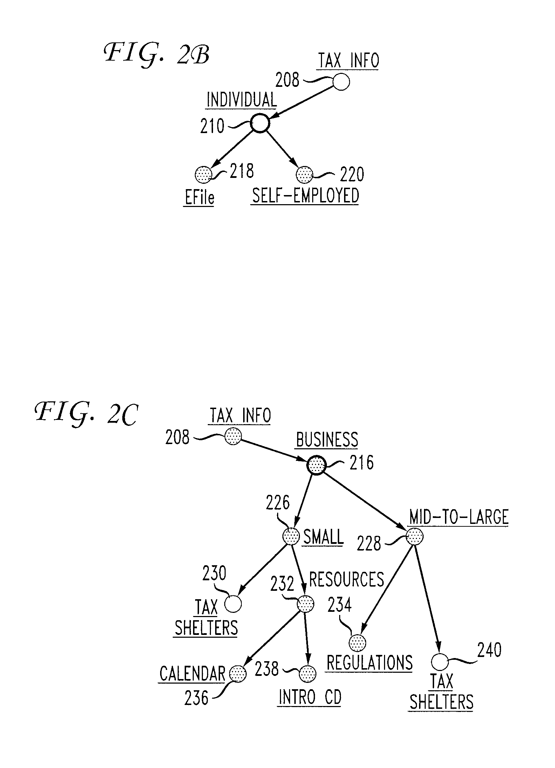

Using the user utterance, the system establishes at least one lit node and a new focus node (306). FIG. 2B illustrates the new focus and lit node as node 210 for "Individual." The answer to query (308) is Yes since there is only a single direct lit descendent (the individual node 210) of the focus node Tax Info 208. The method determines whether the lit focus node 210 is a leaf node (314). In this example, the answer is no since an e-file node 218 and a self-employment node 220 both remain as descendents of the focus node 210. The method returns to step (318) that prompts the user as follows to disambiguate between descendent nodes: "Would you like to hear about e-filing or self-employment?". The user responds with "Electronic filing" and the method establishes the electronic filing node (218) as the new focus and lit node (306). This e-filing node 218 is a single direct descendent of the focus node 210 and so node 218 is made the new focus node (310). The method determines that the lit focus node 218 is a leaf node (314) and thus the disambiguation routine is complete (316).

There are several variations contemplated to the above description. For example, the leaf node does not have to formally become the focus node for disambiguation to be complete. Once a single leaf node is lit, then the method may have sufficient information to identify the user intent without the step of assigning the single lit leaf node as the focus node.

FIG. 2C illustrates a partial disambiguation portion of the method. This shows how the method operates when more than one node is lit by the user input in step (306). We will continue to follow the tax example starting at the beginning of the prompting process to illustrate the operation of the method. The focus node to start is the Tax Info node (208). The system starts by prompting the user: "This is the IRS help system. What can I do for you?" (302). The user responds: "I need to find out more about tax shelters." (304). Based on the user utterance, the method establishes two lit nodes 230 and 240 for tax shelter information. The answer to the inquiry in step (308) is no, since there is not a single direct descendent of the focus node 208 that is lit. The method next finds the lowest common ancestor node of all lit nodes and sets it as the focus node (312). This is accomplished in the tax example by establishing the business node 216 as the new focus node since it is the closest common ancestor to the lit tax shelter node 230 and the lit tax shelter node 240. After step (312), the method prompts the user to disambiguate between descendent nodes of the focus node (318) as follows: "Are you a small business, or a mid-to-large sized business?" The user responds with "A small business." (304). Based on the user utterance, the system establishes at least one lit node and a new focus node (306). The new focus node is the small business node 226. This node is also lit. The tax shelter node 240 has been "cut" sine the mid-to-large business category associated with the node 228 is specifically ruled out based on the interchange with the user. The lit tax shelter node 230 is a single direct descendent of the focus node 226 (step 308). The tax shelter node 230 is made the new focus node in step (310) and the method determines that the lit focus node 230 is a leaf node in step (314). Thus, disambiguation is complete (316).

In another aspect of the invention, not shown in FIG. 3, if step (306) returns a single lit node as a descendent of the focus node, but the single lit node is not a direct descendent but is a leaf node, then the algorithm will have identified the user need. For example, suppose the user states in response to the first prompt of the system, that he desires e-filing information. In this case, the root node may stay on Tax information 208 but the lit node is the e-filing node 218, which is a leaf node. The only other disambiguation that needs to occur may be informational in that only individual e-filing information is available as a category. There is no business e-filing node. Therefore, the system may either identify the user need at that point or engage in further interaction to inform the user that only individual e-filing tax information is available.

In addition to the basic functions of the disambiguation module, other options are available. For example, prompts may be utilized to identify implicit choices. Yes/No prompts can be written to eliminate a path, rather than select a node. For example, the last prompt in the example above when disambiguating between the small business node 226 and mid-to-large business node 228 could have been: "Are you a large or mid-sized business?" If this had been answered yes, the appropriate node would have been lit. If it had been answered no, then the path to that node could have been eliminated, implicitly selecting the small business branch of the tree.

The prompts may be designed to solicit multiple inputs at the same time. This approach may be used if a single response lights nodes corresponding to more than one concept. Furthermore, prompts may be developed to select between contradictory inputs. For example, if the user volunteers information relevant to a node in a part of the tree that has been eliminated from consideration, the model will actually result in a more general focus node. This is not allowed when the newly lit nodes are descendants of the focus, but should be allowed in other cases. Moreover, a mixed-initiative dialog must also allow the user to change the focus of the request to different objectives at any time. In this case the method can take into consideration discourse context shifts where the user request does not match any of the expected CTs (for example: 'By the way, what is the deadline for this year tax returns?'). A context shift table will point the dialog execution to a different module that will handle the spurious request locally and return the execution to the current dialog context when completed. The method according to the present invention allows the system to maintain lit node records, states and contexts in case the user switches the context. A digressions table can help to maintain this information. Such a table is similar to context shifts table, but they maintain state and create a subdialog. For example, a "help" digression would invoke another dialog module and pass some information about the current dialog context.

Another example may illustrate this point. Assume the system reaches the leaf node 230 in the above example, which identifies that the user desires tax information for a small business tax shelter. If the user then changes the context of the discussion and requests help to fill out a tax form or some other separate process, the system may utilize the previously obtained information to skip a number of steps in the new flow dialog. The system may respond: "yes, I can help with filling out tax forms. Are you interested in small business tax shelter related forms?" The dialog continues in the new context but can utilize the information obtained from the tax information flow control tree of FIG. 2A.

The AT&T VoiceTone^{TM} Natural Language Services and Florence Dialog Manager Toolkit provide an example framework in which to design and generate a disambiguation method according to the present invention. An application will most typically use the Florence Recursive Transition Network (RTN) dialog strategy for its top-level dialog and most of its subdialogs, but when multiple and contradictory user inputs are possible dialog strategy based on the clarification method enhances functionality of an application and provides a compact and easy to maintain structure. The follow exemplary code provides an example implementation for the example described in Fig. 2A, as it is implemented using the Florence Dialog Toolkit:

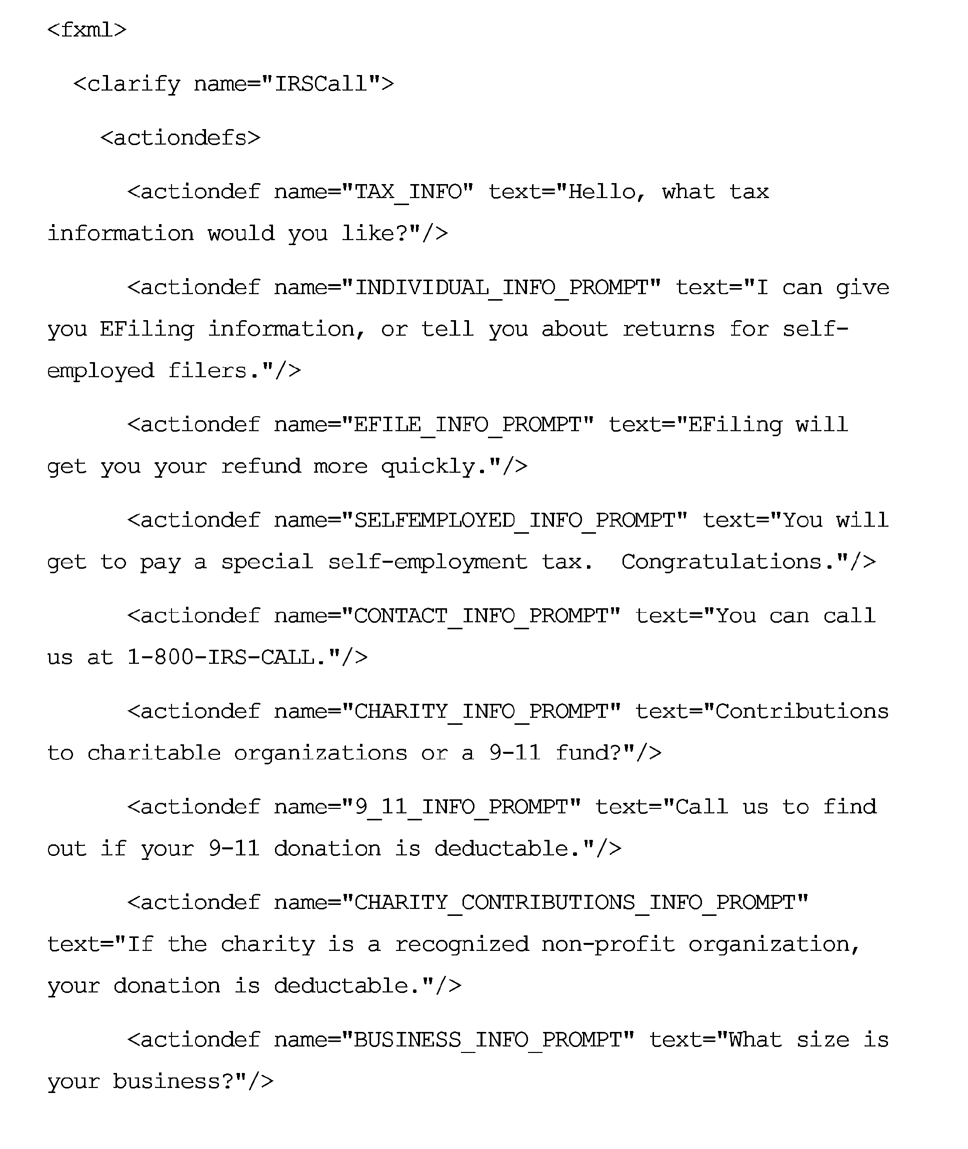

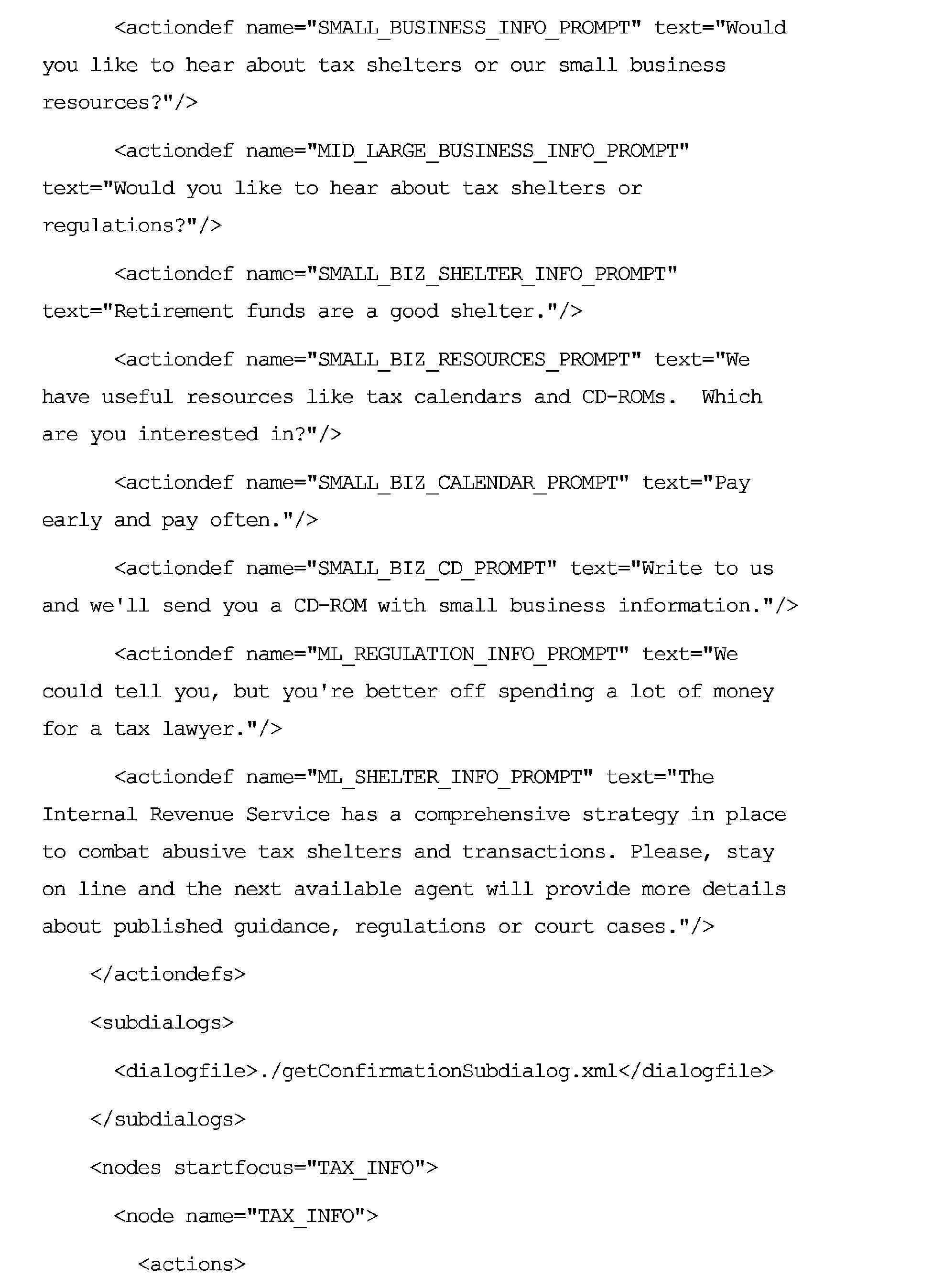

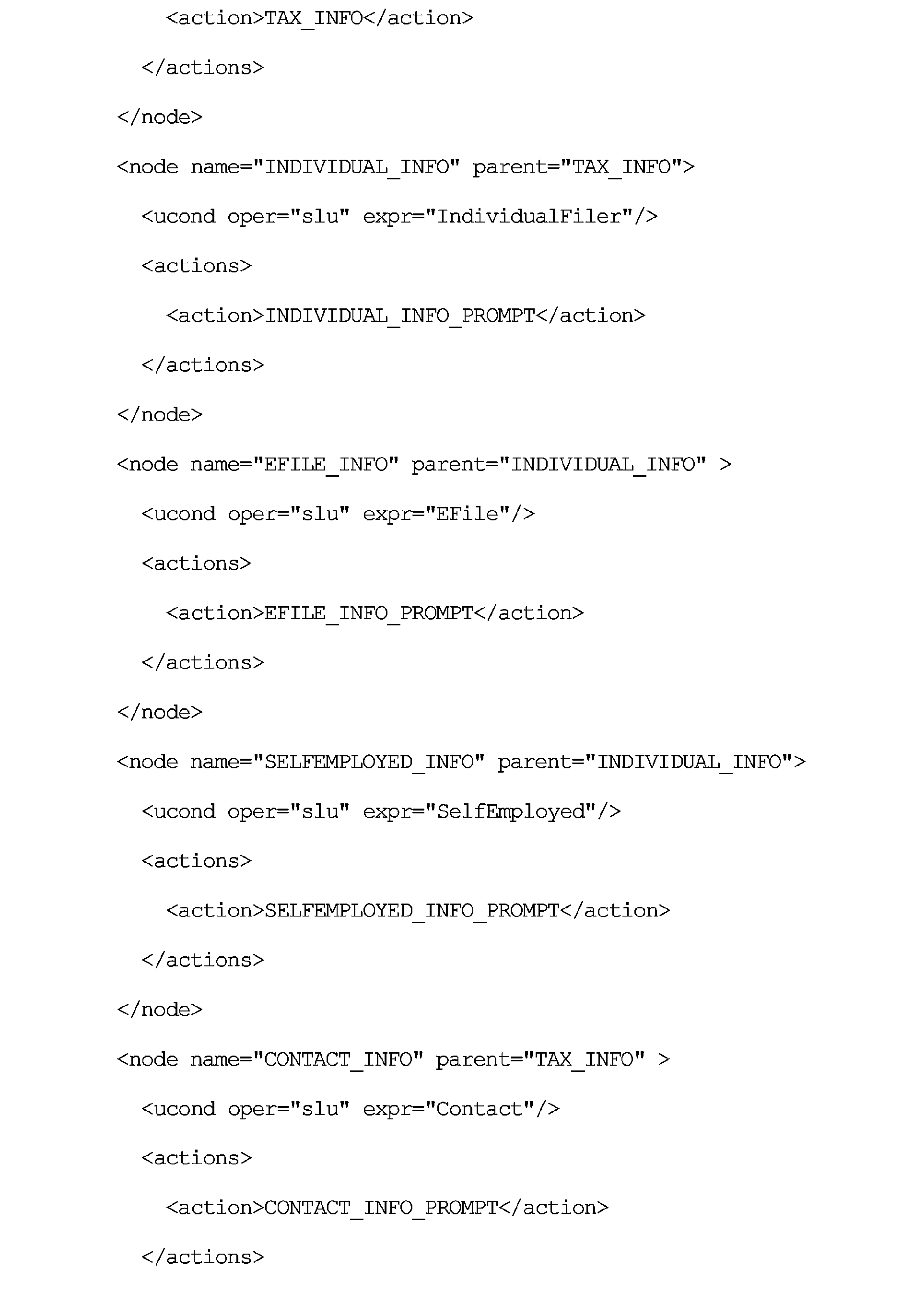

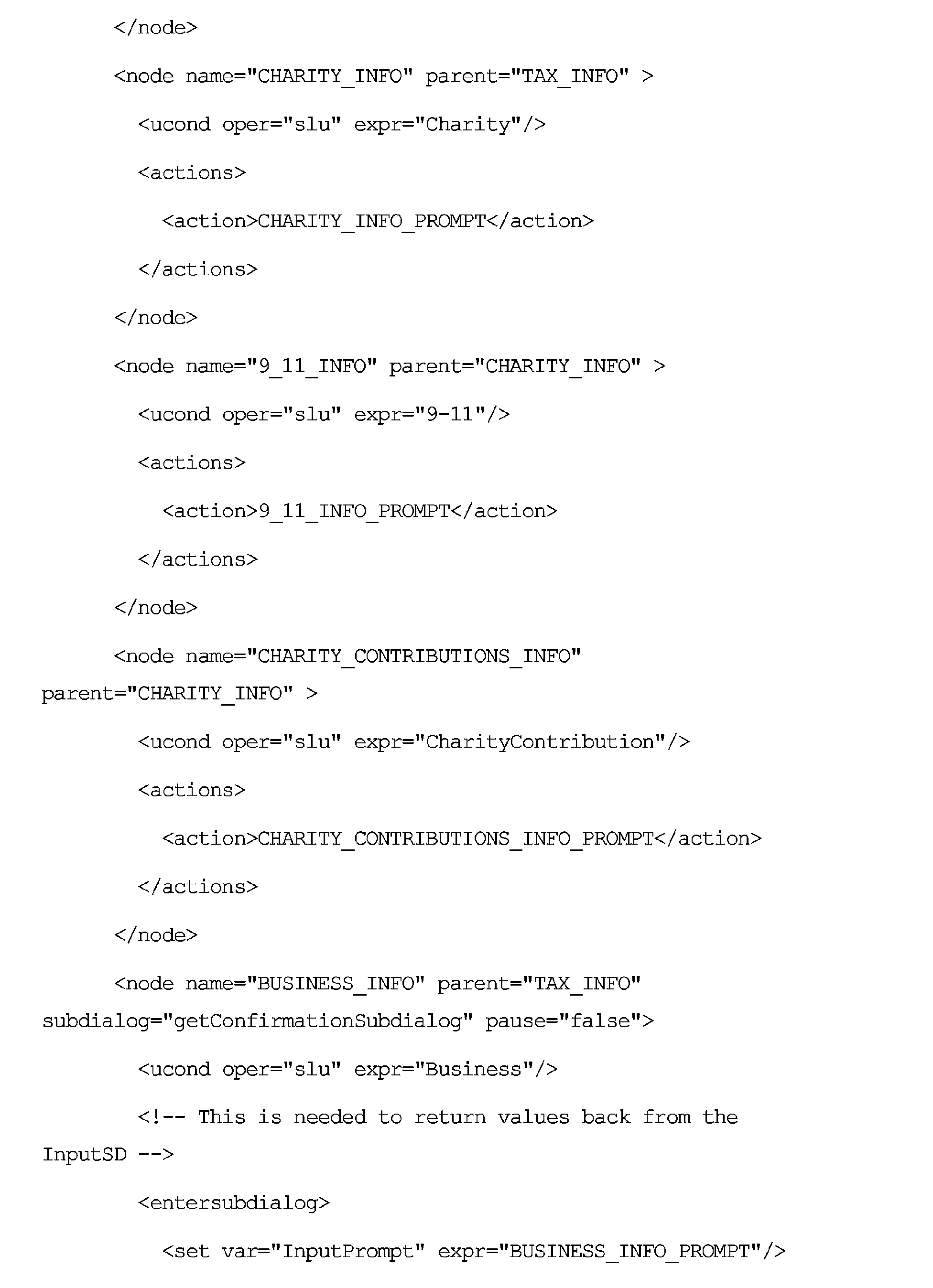

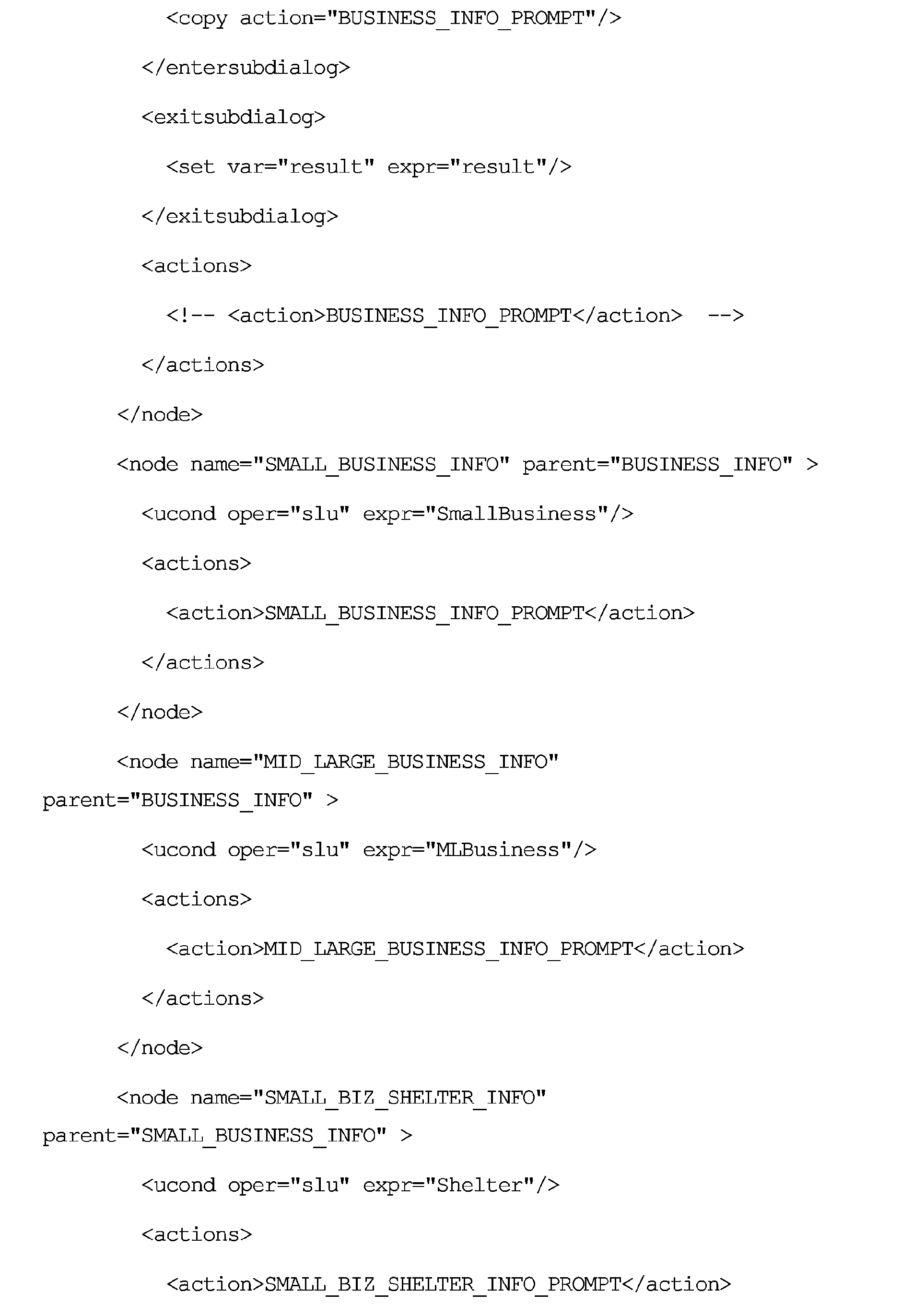

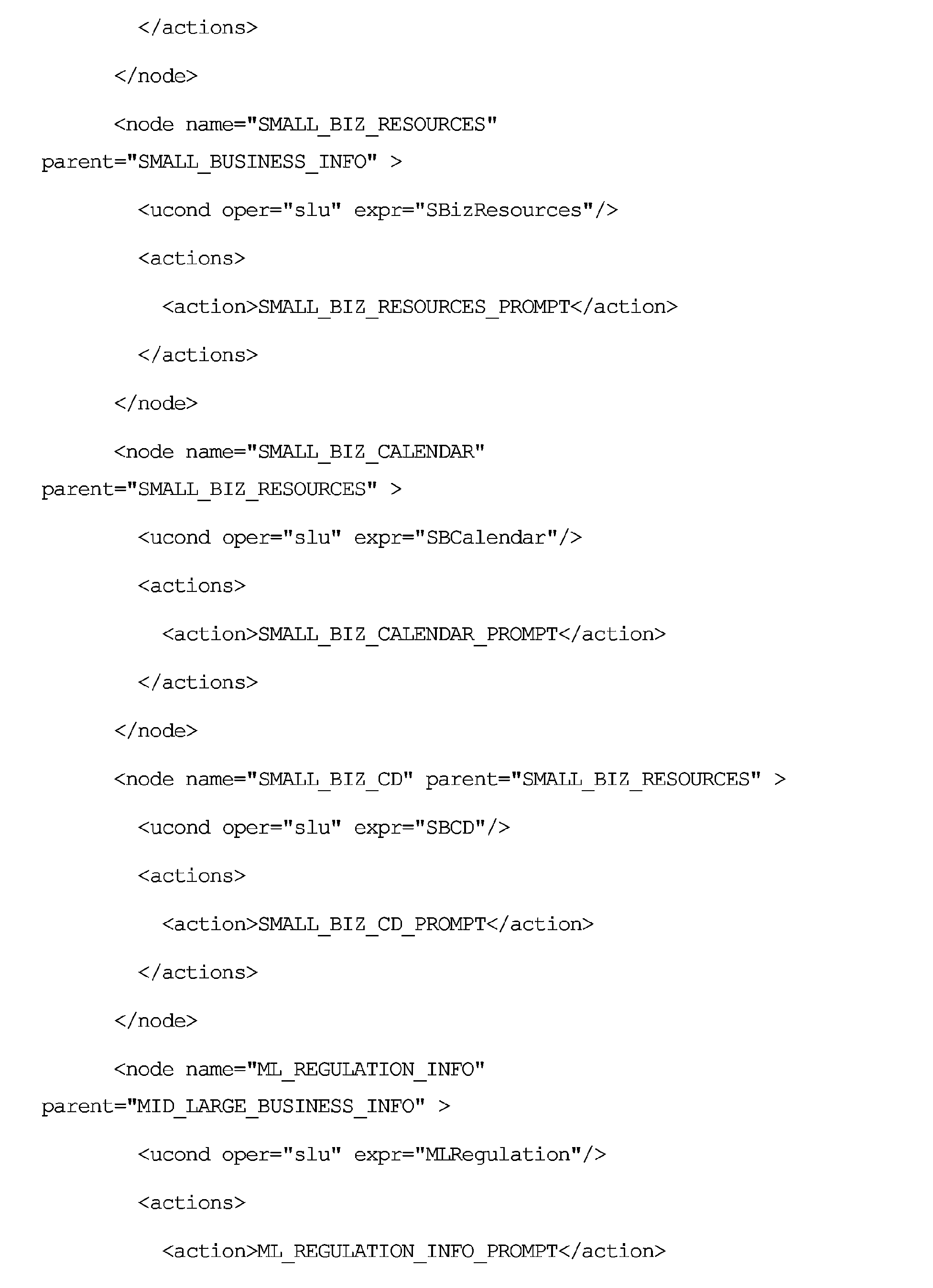

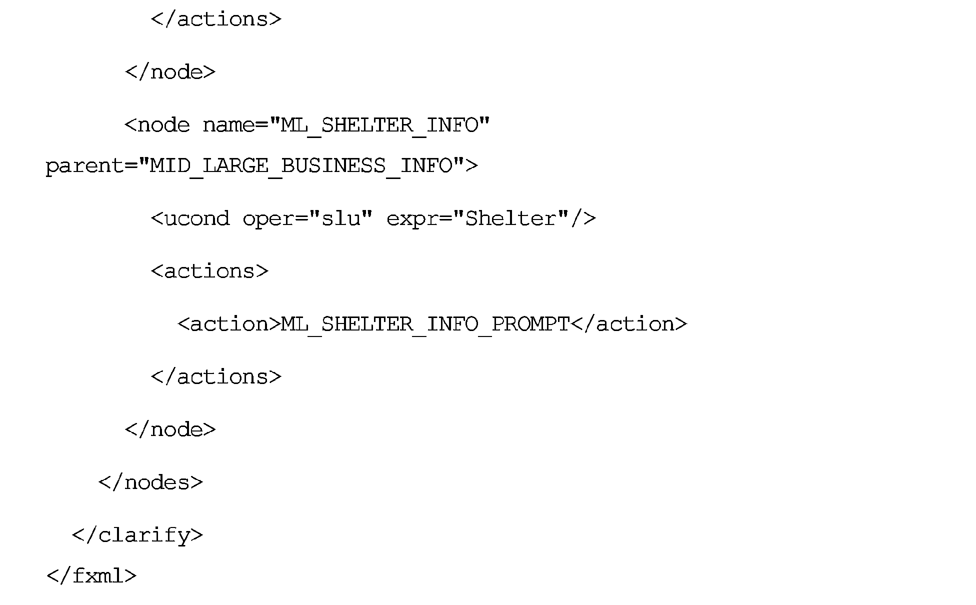

As with all the spoken dialog files in the VoiceTone environment, the fxml element tag establishes this as a Natural Languages application file. The clarify tag establishes the file as a Clarification dialog file type and contains all the child elements used to construct this dialog. The subdialogs tag is used for declarations of any subdialogs that will be called by this dialog. The actiondefs tag contains all the individual actiondef elements used to identify specific action names and associate them with prompt text, grammar source, variables, and events. The nodes tag contains all the individual node elements used to identify specific node names and associates them with subdialog and pause attribute values.

Embodiments within the scope of the present invention may also include computer-readable media for carrying or having computer-executable instructions or data structures stored thereon. Such computer-readable media can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium which can be used to carry or store desired program code means in the form of computer-executable instructions or data structures. When information is transferred or provided over a network or another communications connection (either hardwired, wireless, or combination thereof) to a computer, the computer properly views the connection as a computer-readable medium. Thus, any such connection is properly termed a computer-readable medium. Combinations of the above should also be included within the scope of the computer-readable media.

Computer-executable instructions include, for example, instructions and data which cause a general purpose computer, special purpose computer, or special purpose processing device to perform a certain function or group of functions. Computer-executable instructions also include program modules that are executed by computers in stand-alone or network environments. Generally, program modules include routines, programs, objects, components, and data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Those of skill in the art will appreciate that other embodiments of the invention may be practiced in network computing environments with many types of computer system configurations, including personal computers, hand-held devices, multi-processor systems, microprocessor-based or programmable consumer electronics, network PCs, minicomputers, mainframe computers, and the like. Embodiments may also be practiced in distributed computing environments where tasks are performed by local and remote processing devices that are linked (either by hardwired links, wireless links, or by a combination thereof) through a communications network. In a distributed computing environment, program modules may be located in both local and remote memory storage devices.

Although the above description may contain specific details, they should not be construed as limiting the claims in any way. Other configurations of the described embodiments of the invention are part of the scope of this invention. For example, as can be appreciated from the description above, any particular node may have multiple prompts associated with it if the node is the focus more than once. The invention is also in no way limited to tax information. The tax example provides a basic idea of how the method and algorithm operate. Furthermore, the invention is not limited to a specific standard or protocol in developing speech applications. It may be applied to existing speech platforms and used in connection with industry standards such as VXML and SALT to address complex dialog strategies as well as to more traditional HTML-based web applications. Accordingly, the appended claims and their legal equivalents should only define the invention, rather than any specific examples given.

Reference is also made to the Appendix setting out the full text of a specification entitled "Method for Developing a Dialog Manager Using Modular Spoken-Dialog Components". The contents of the Appendix are incorporated herein although it will be appreciated that all references in the Appendix to an "invention" are concerned with a different invention to that referred to elsewhere in this specification.

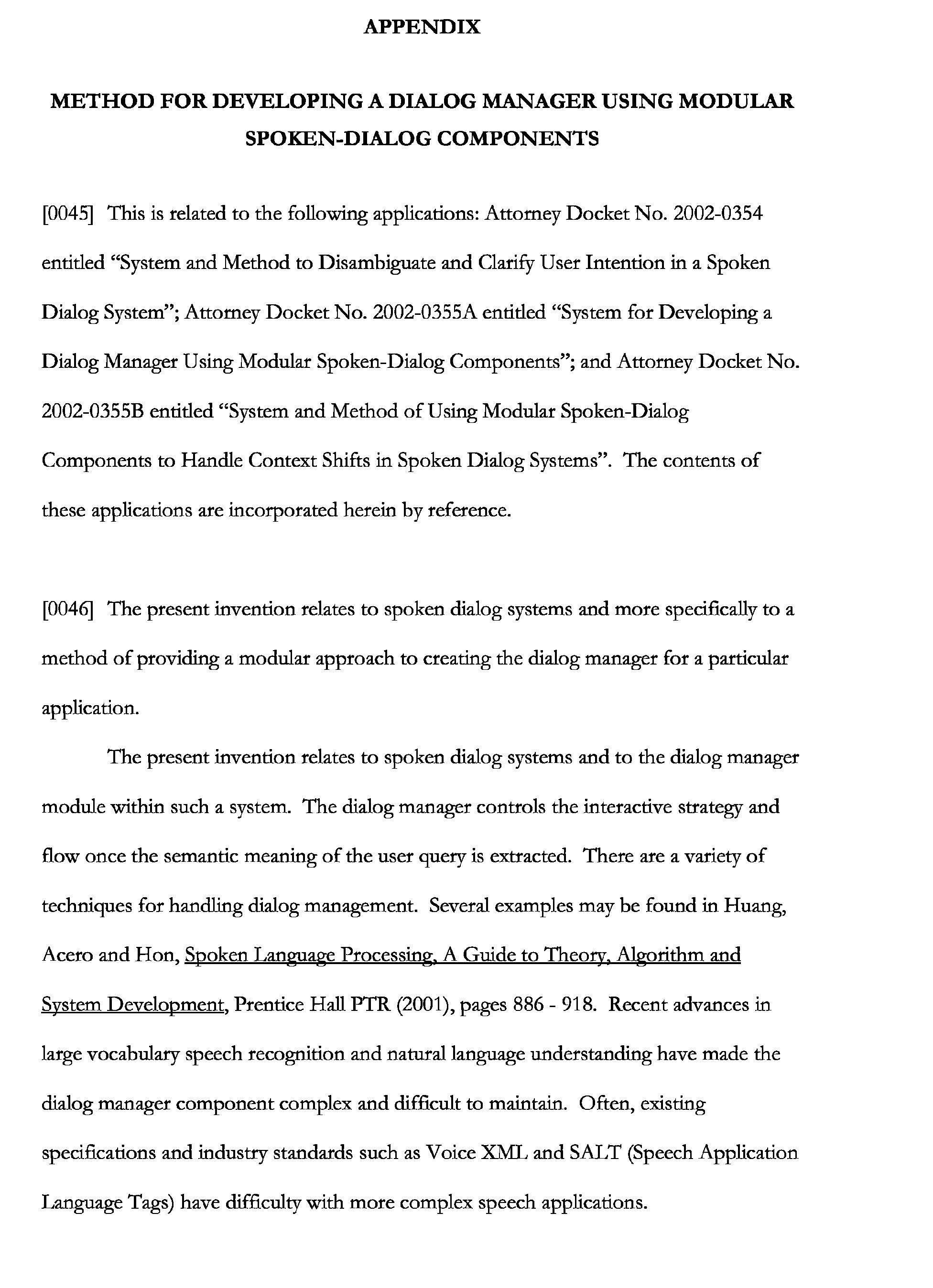

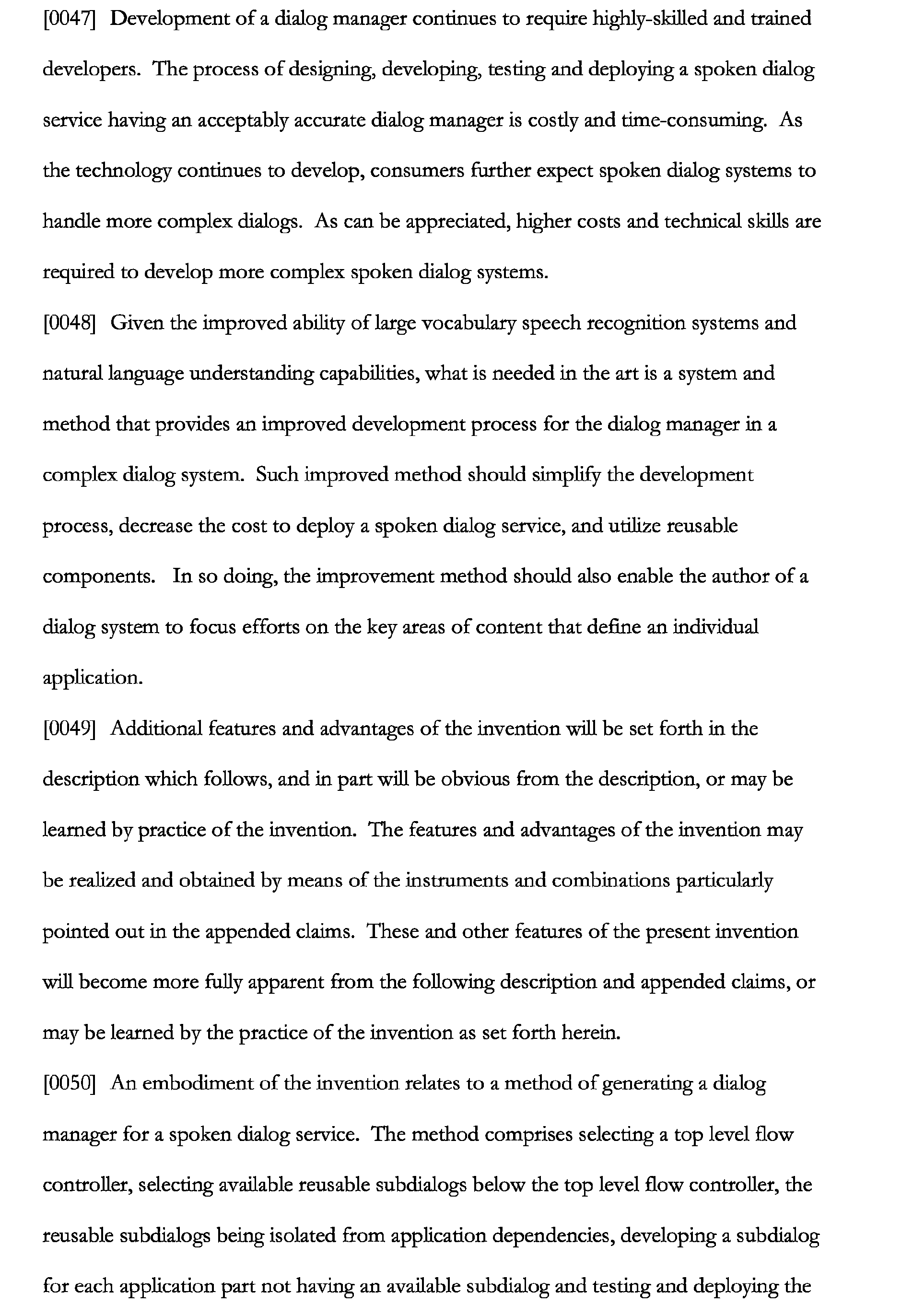

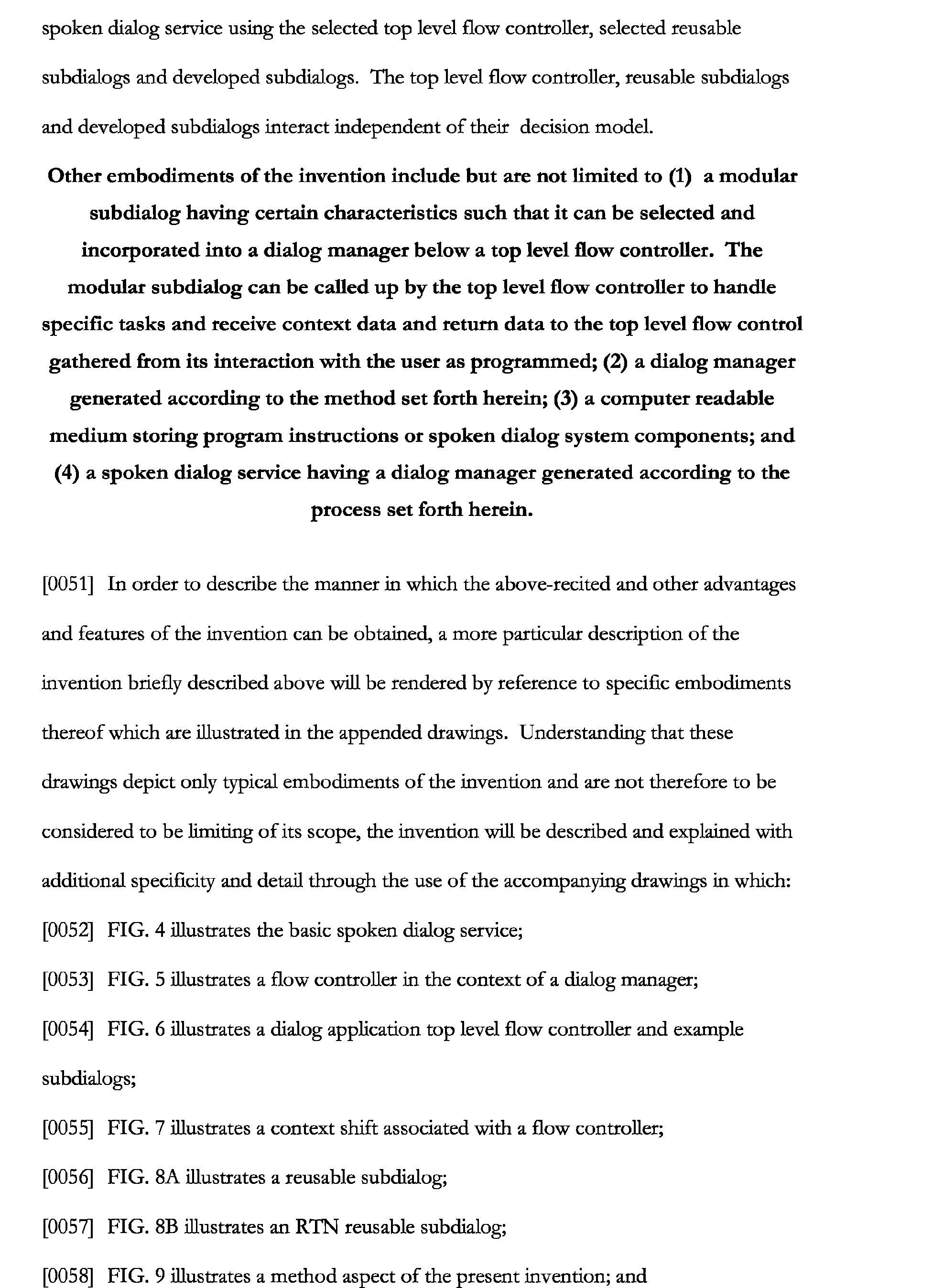

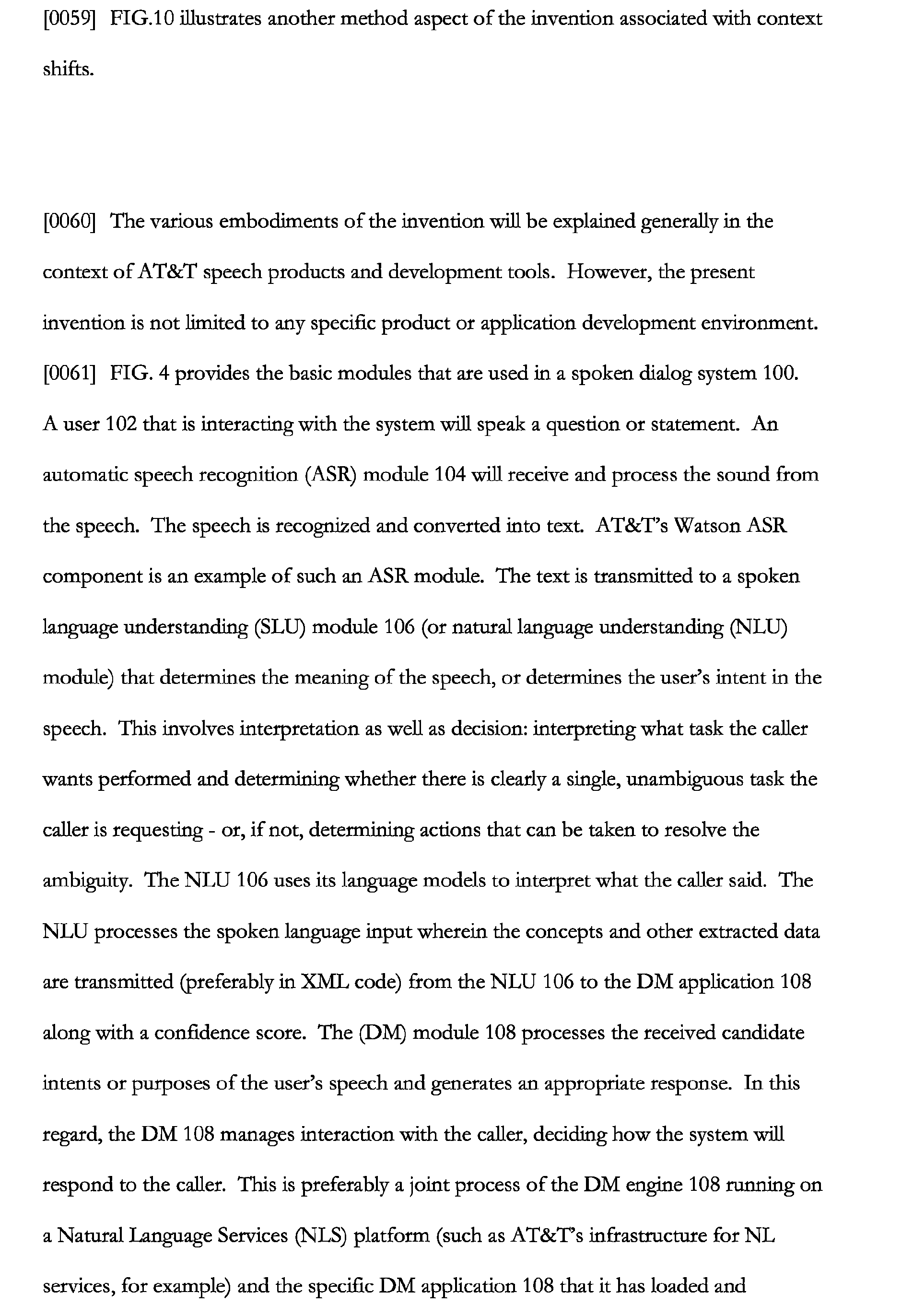

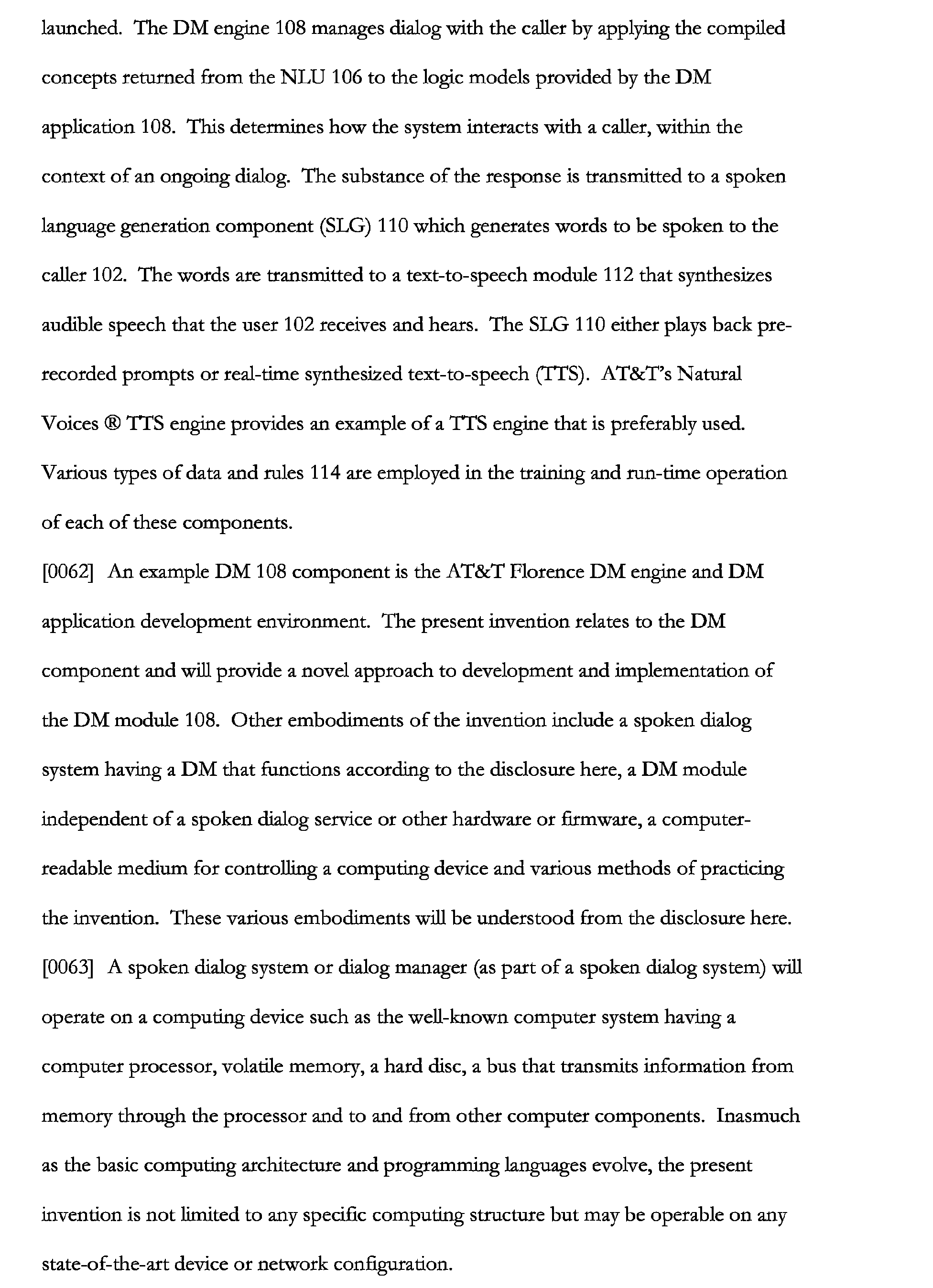

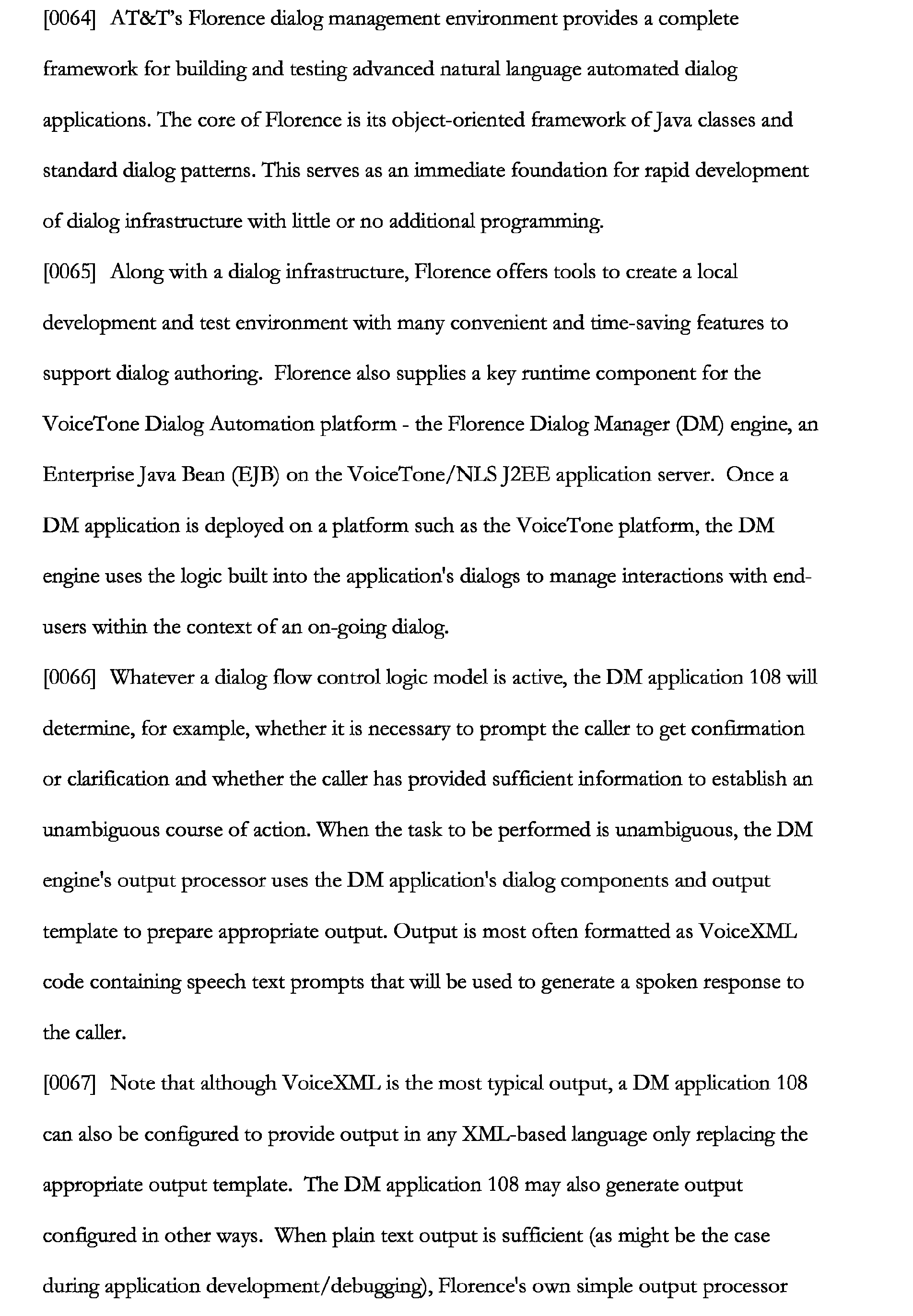

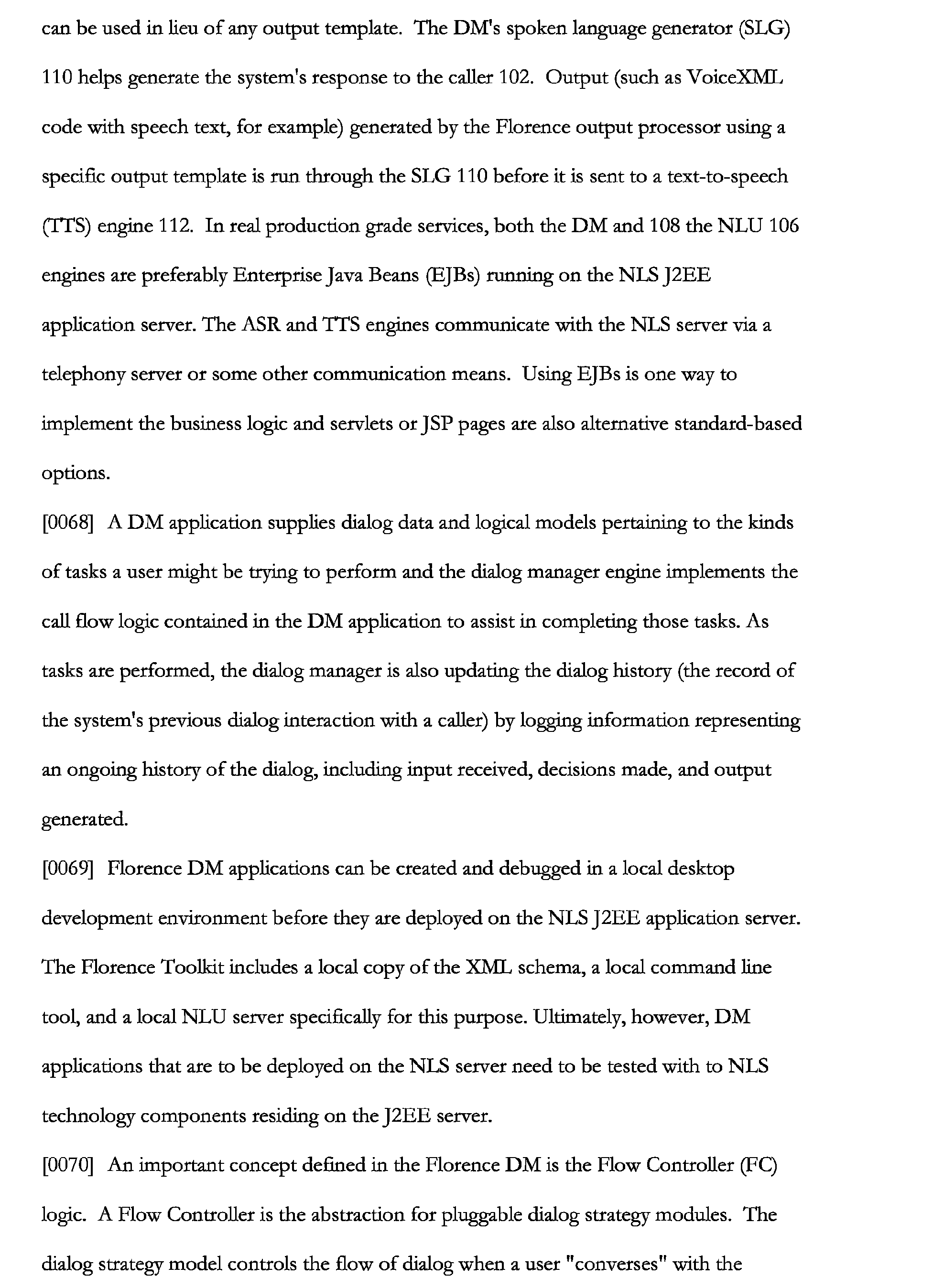

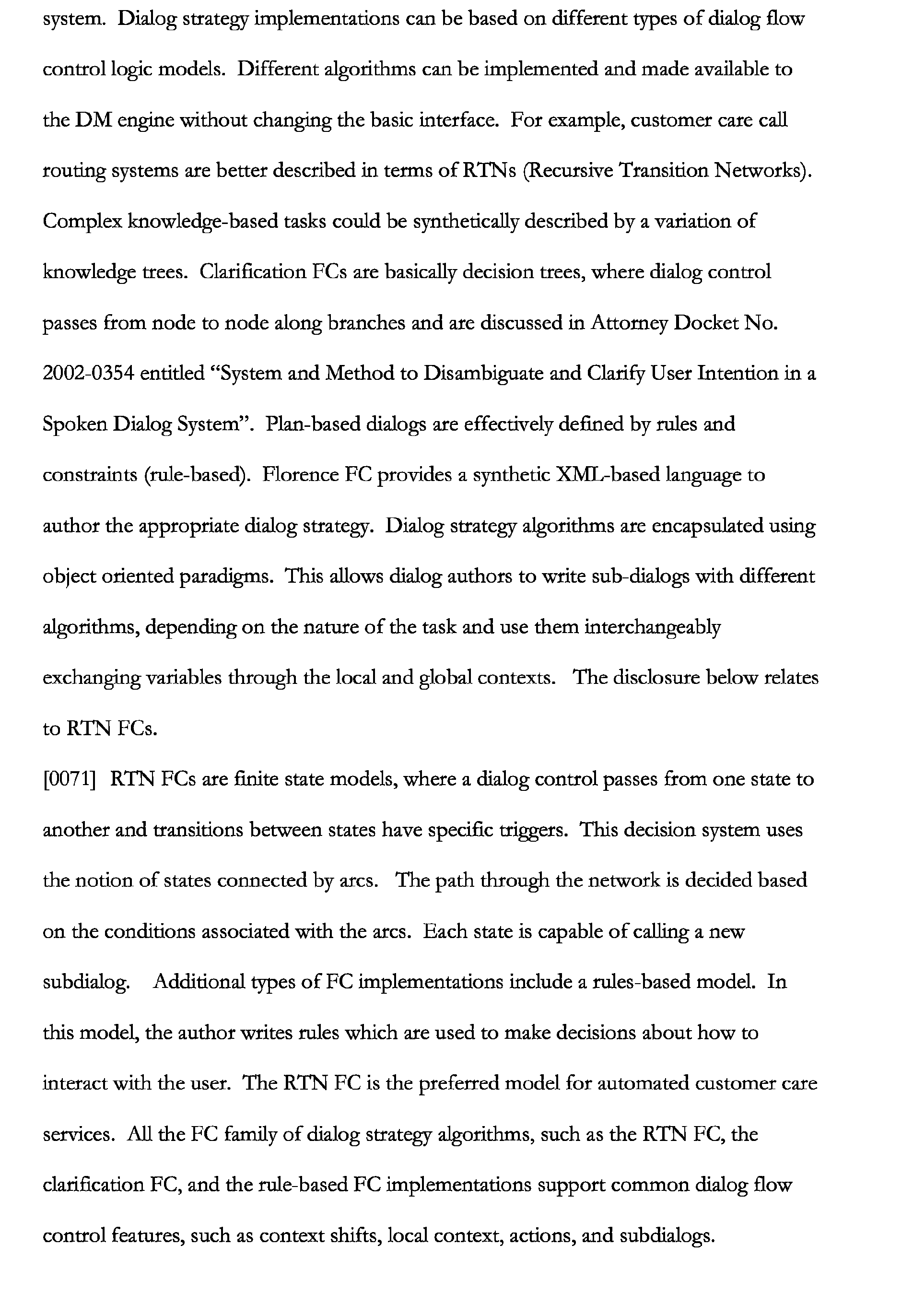

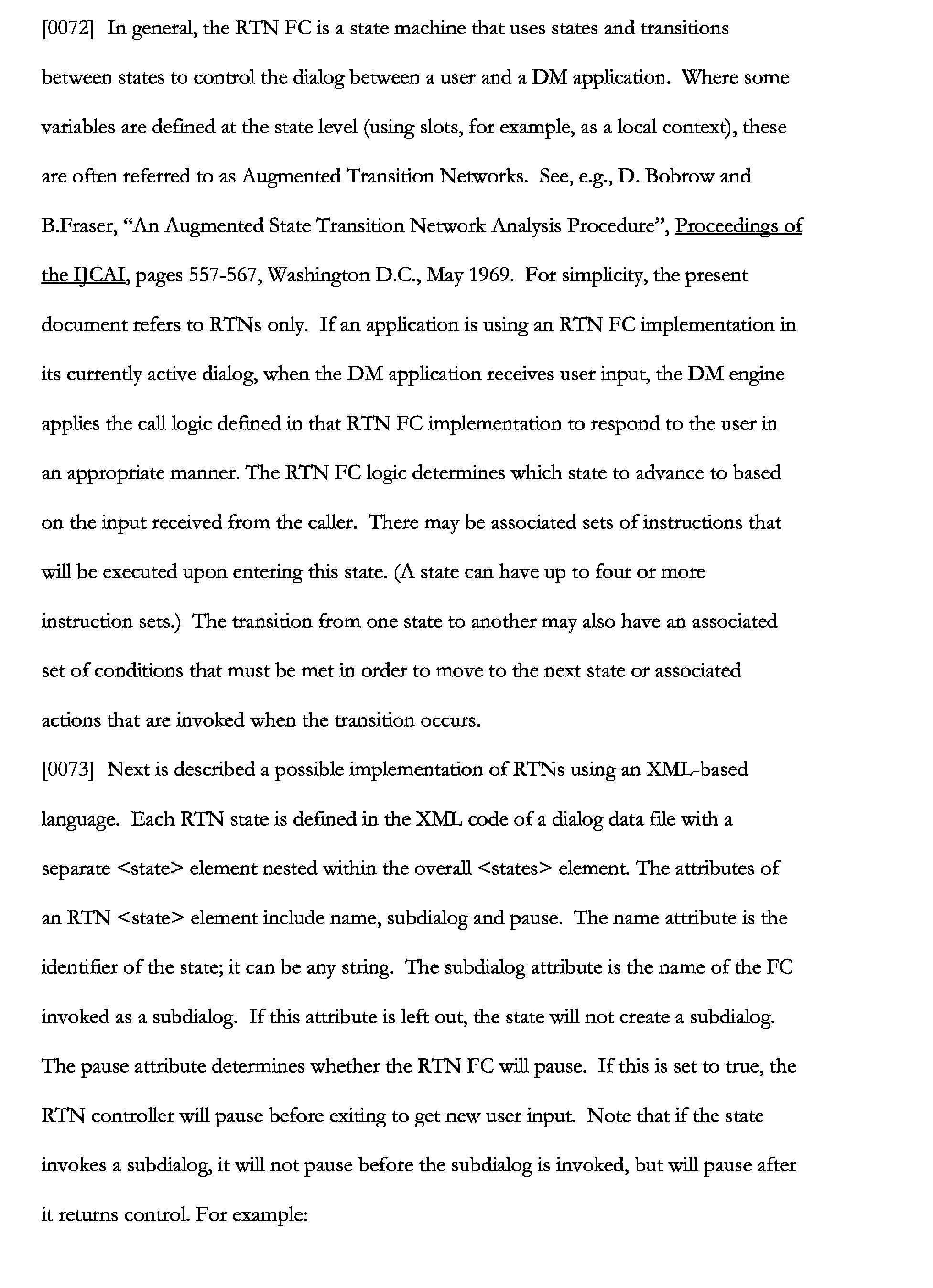

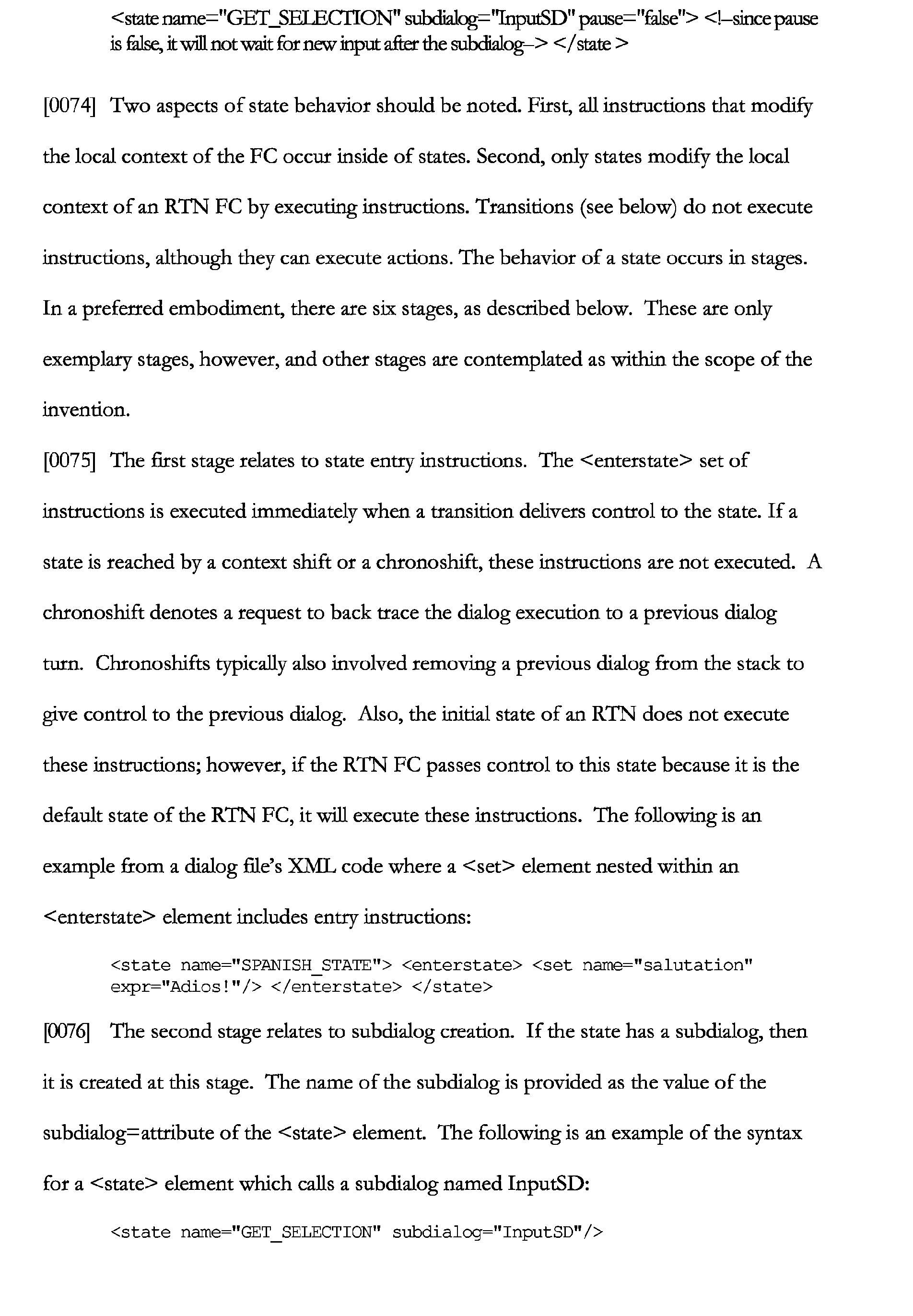

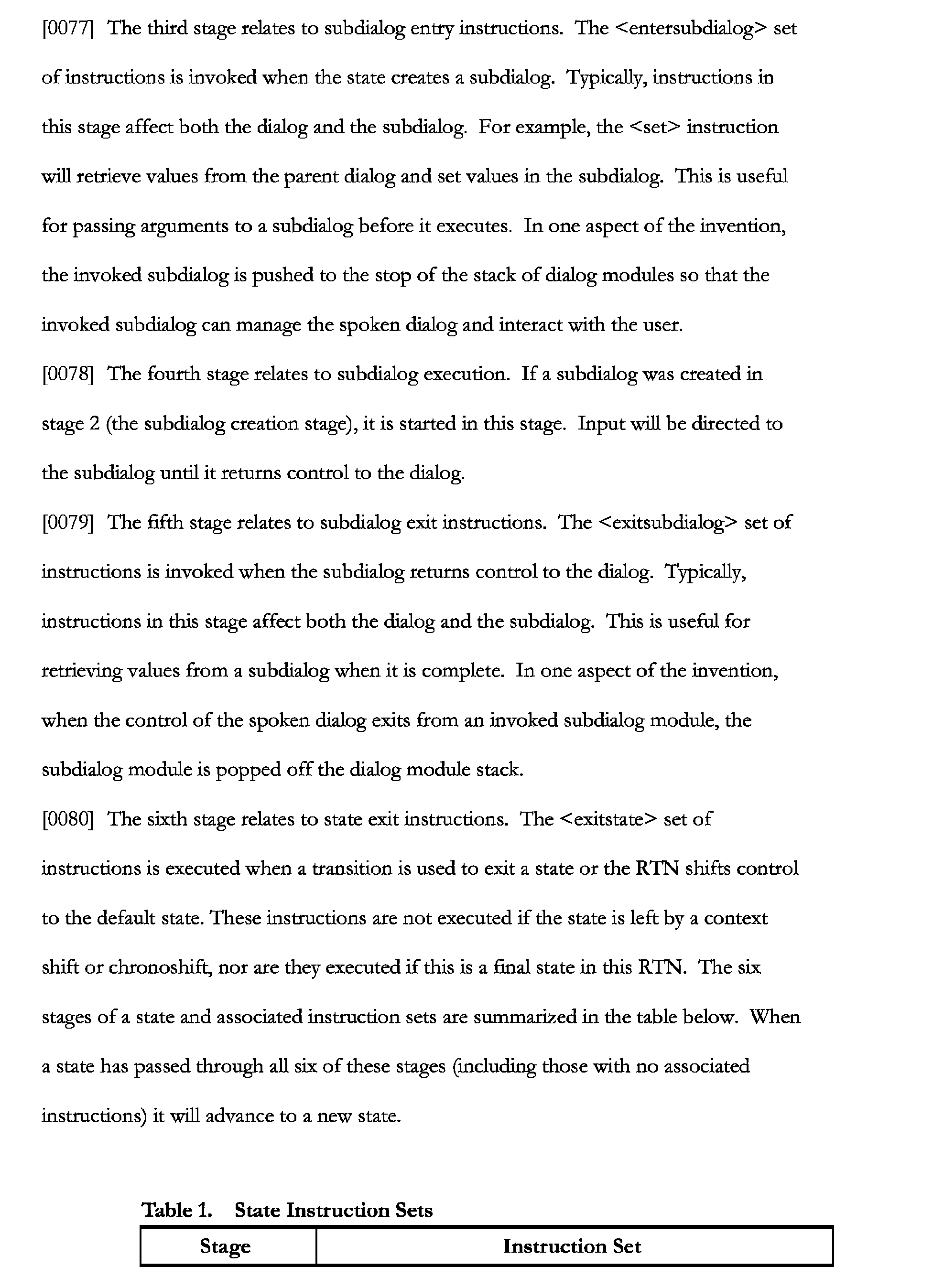

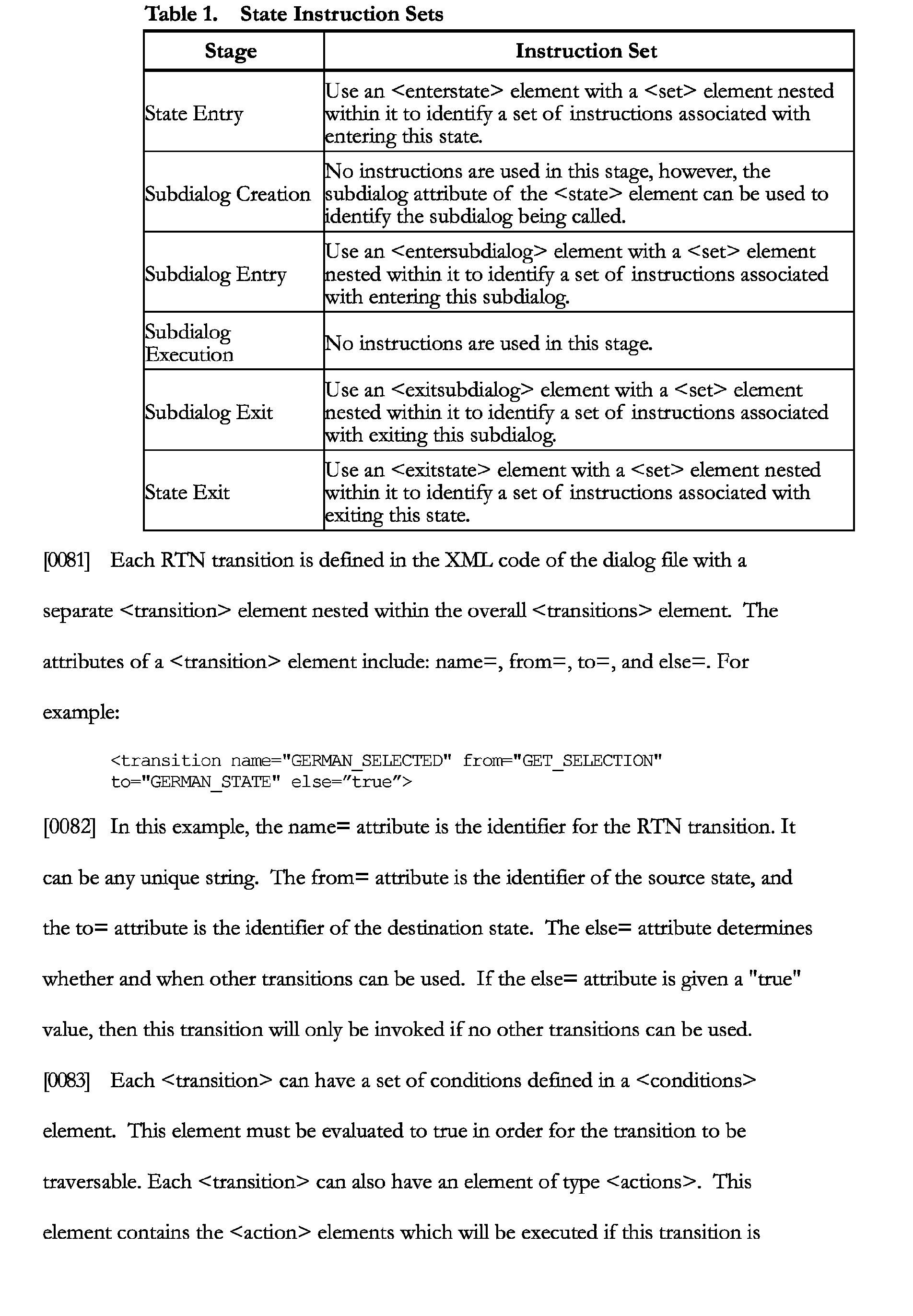

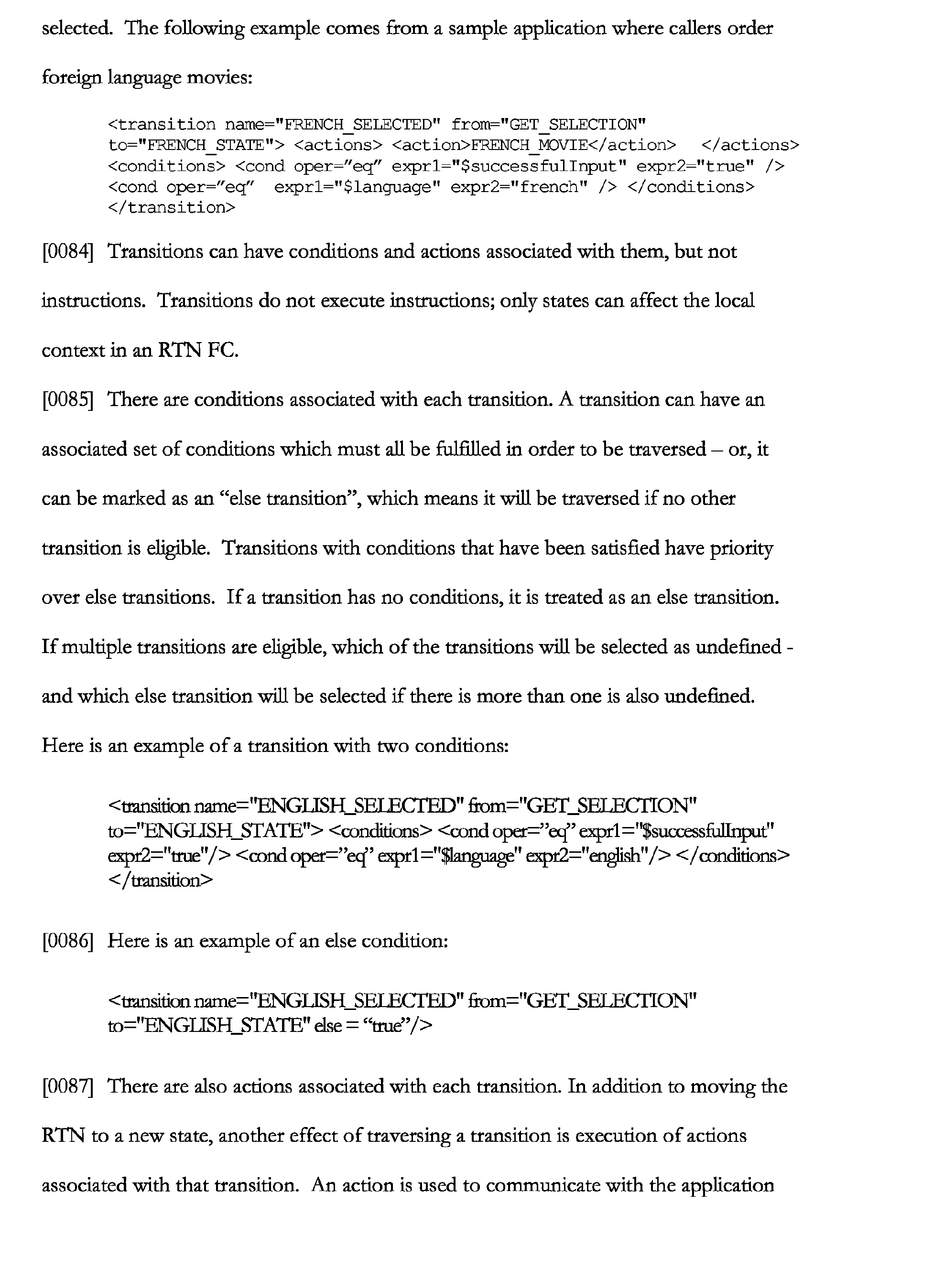

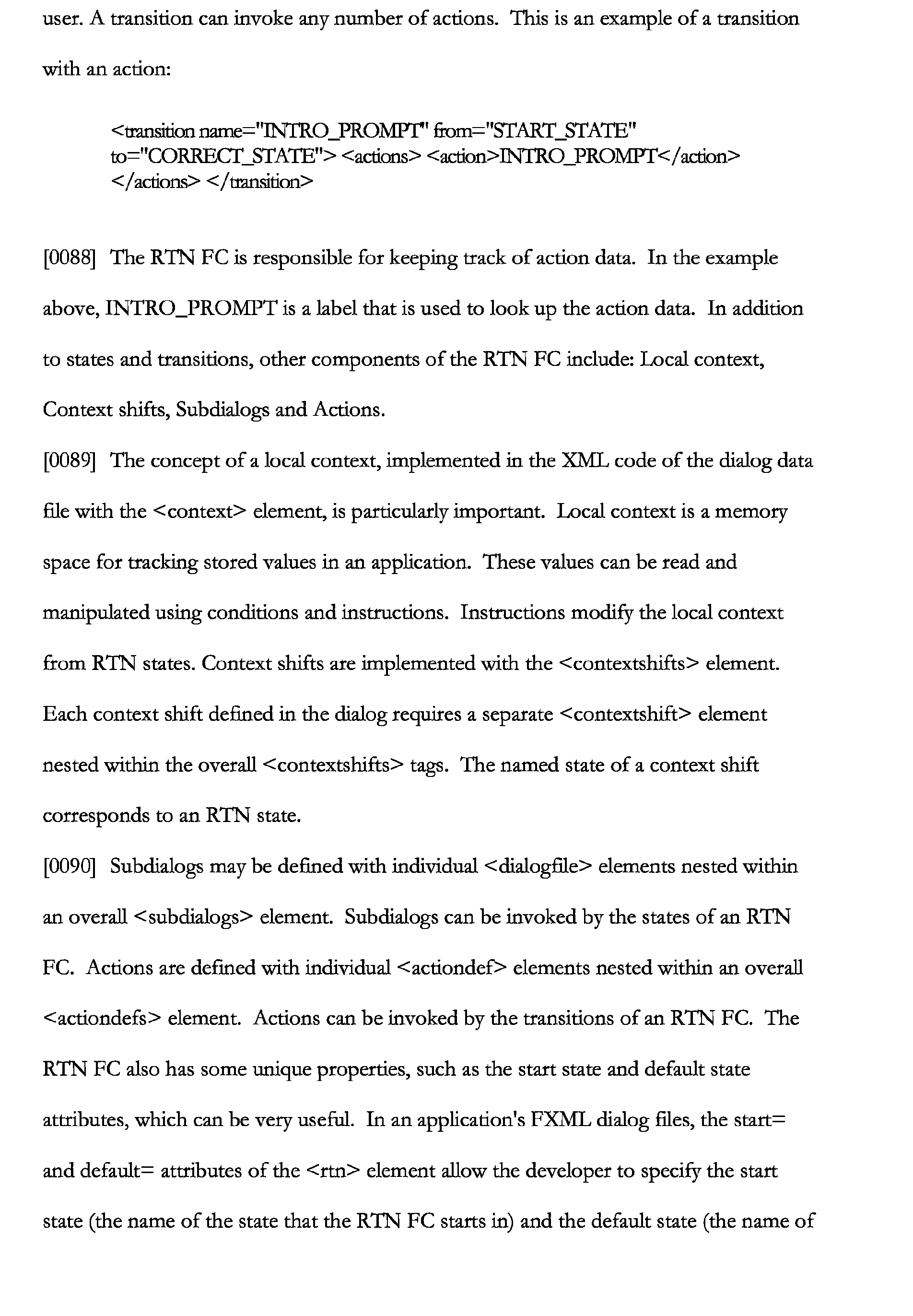

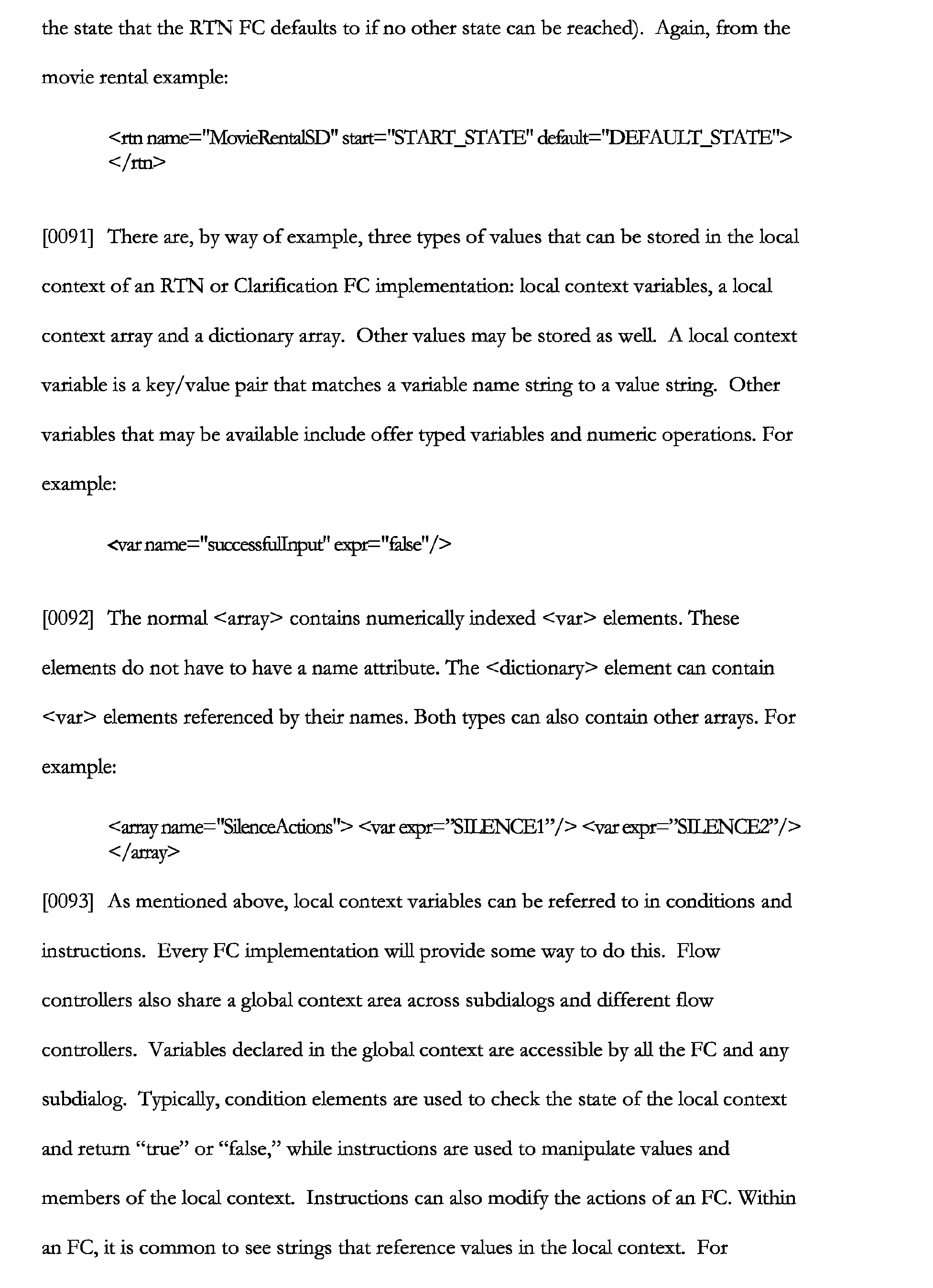

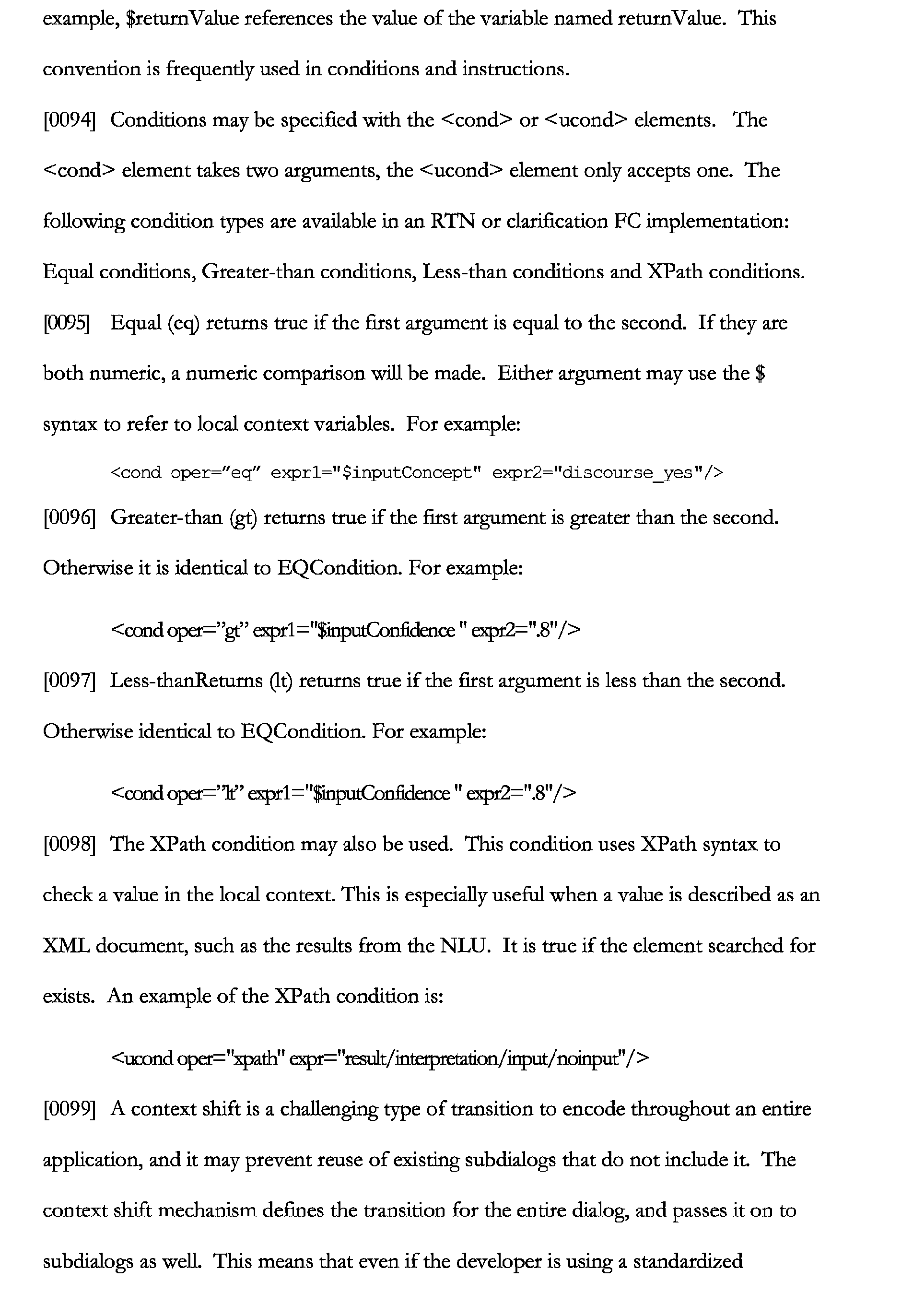

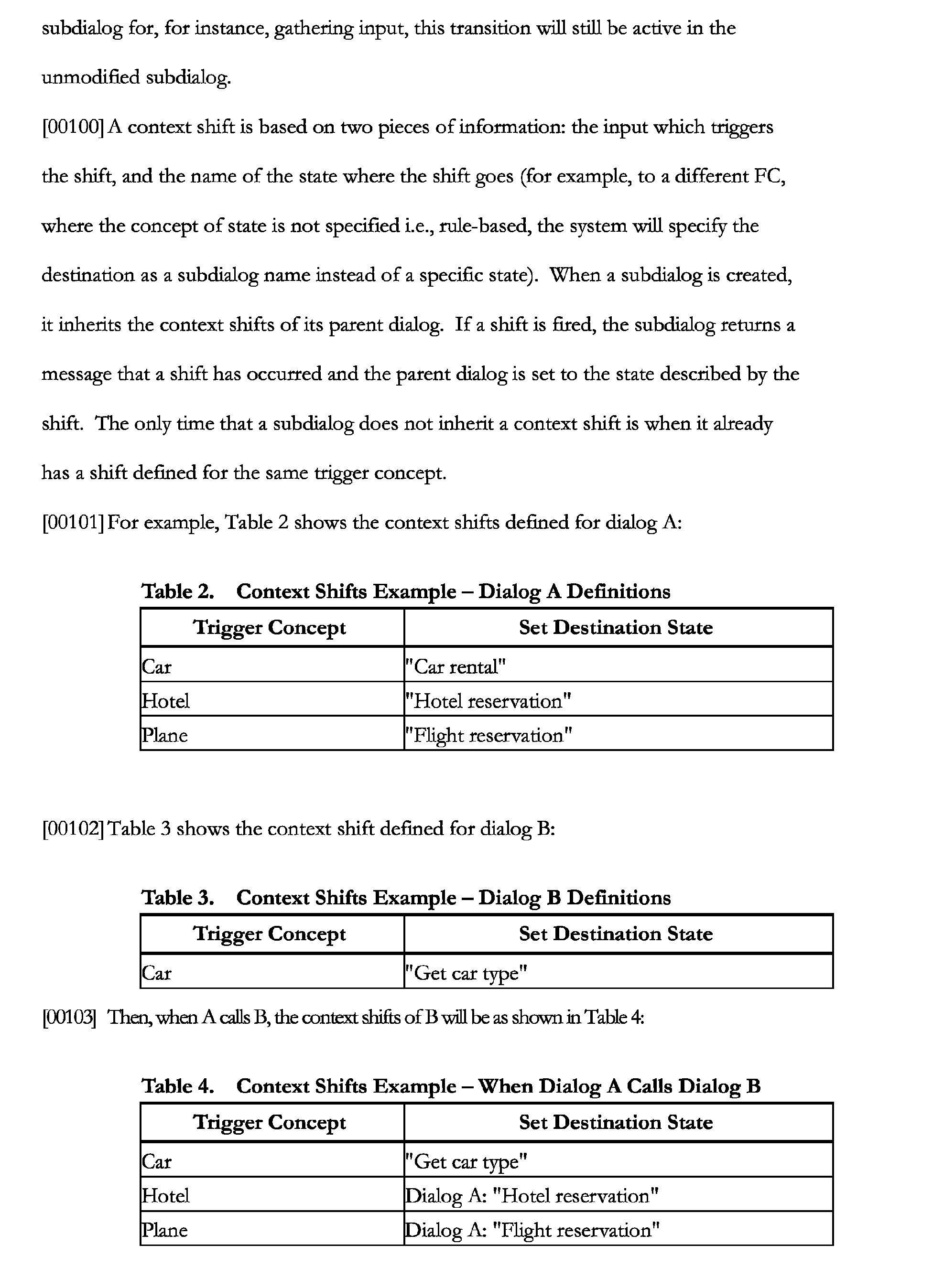

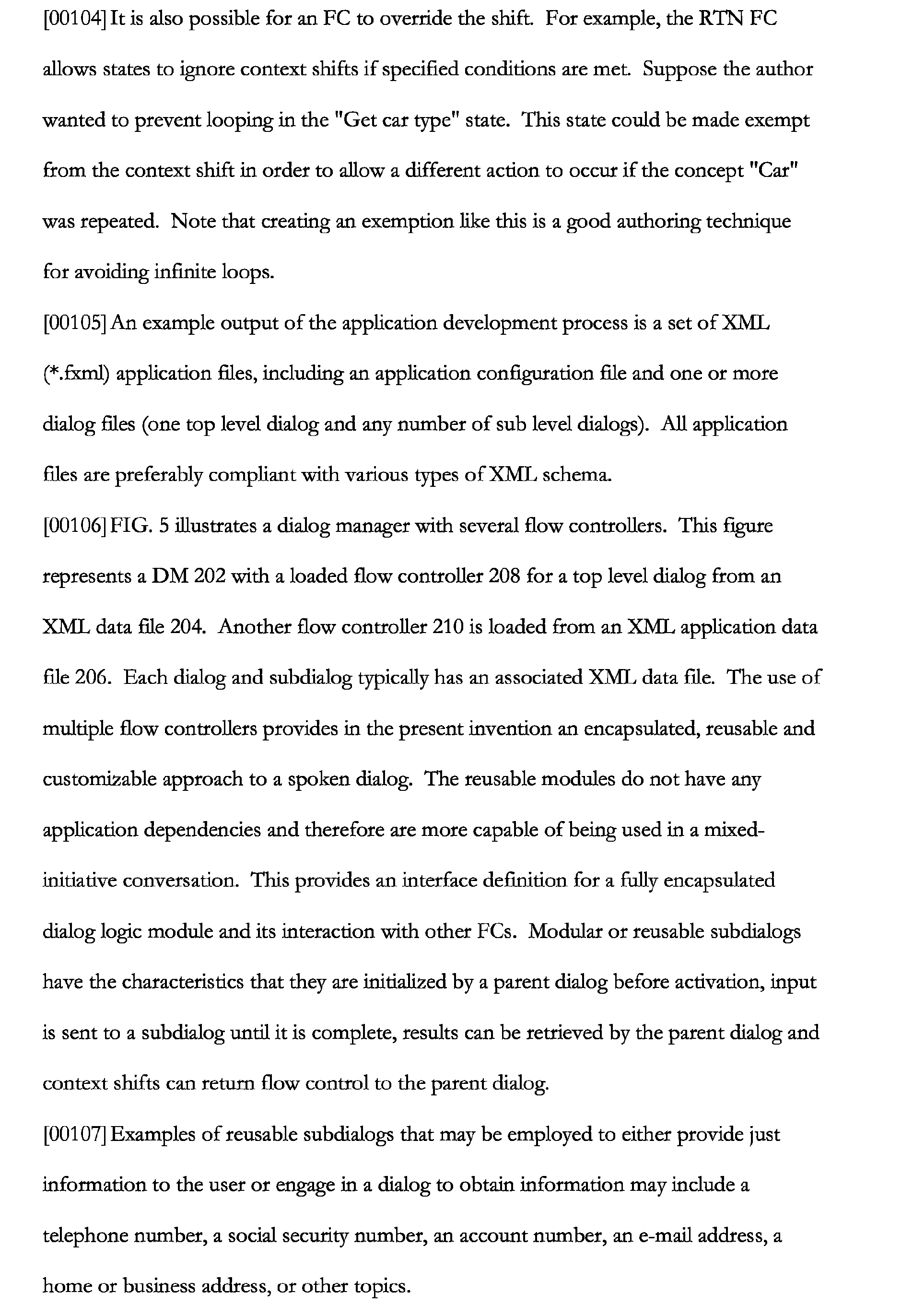

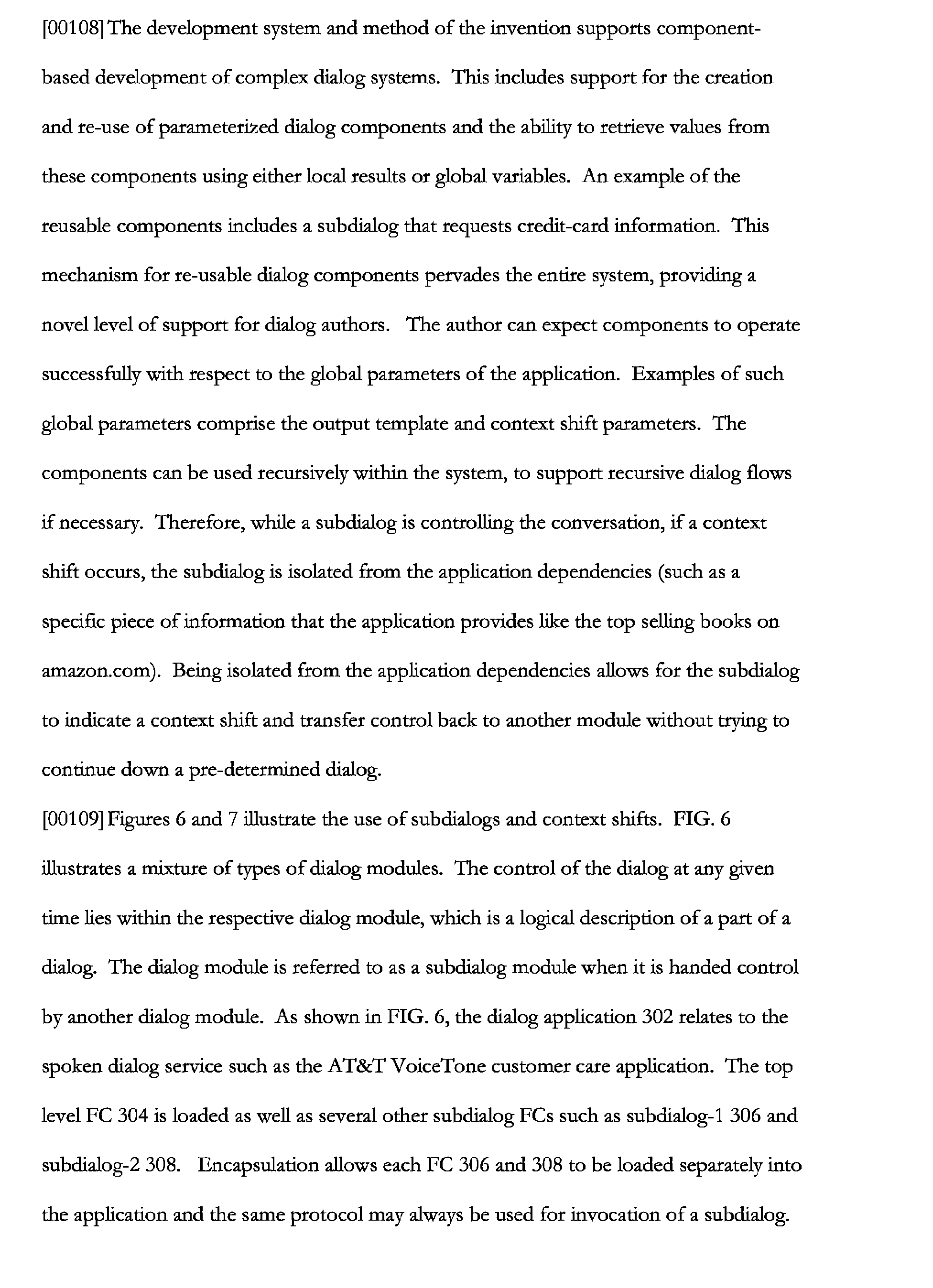

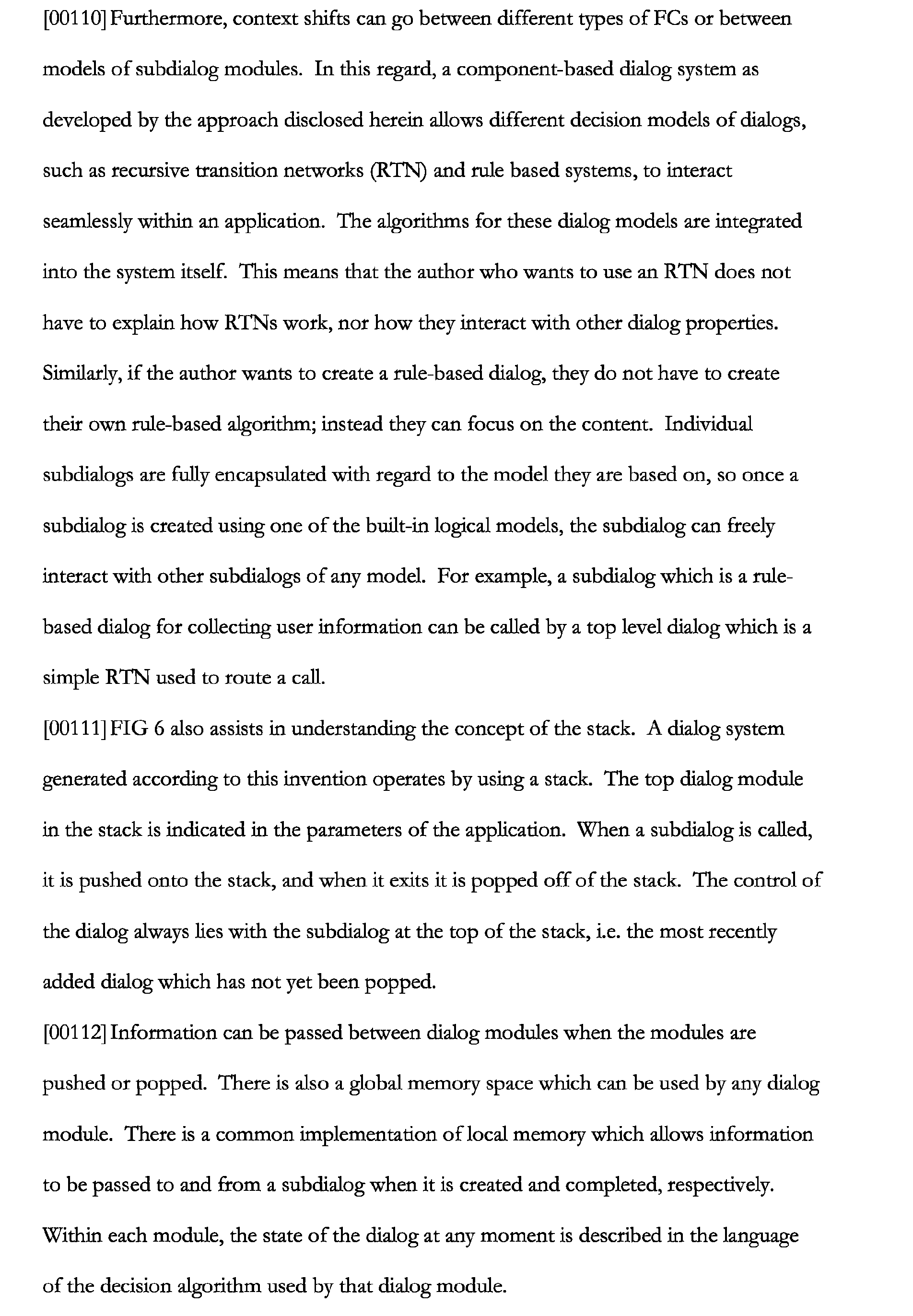

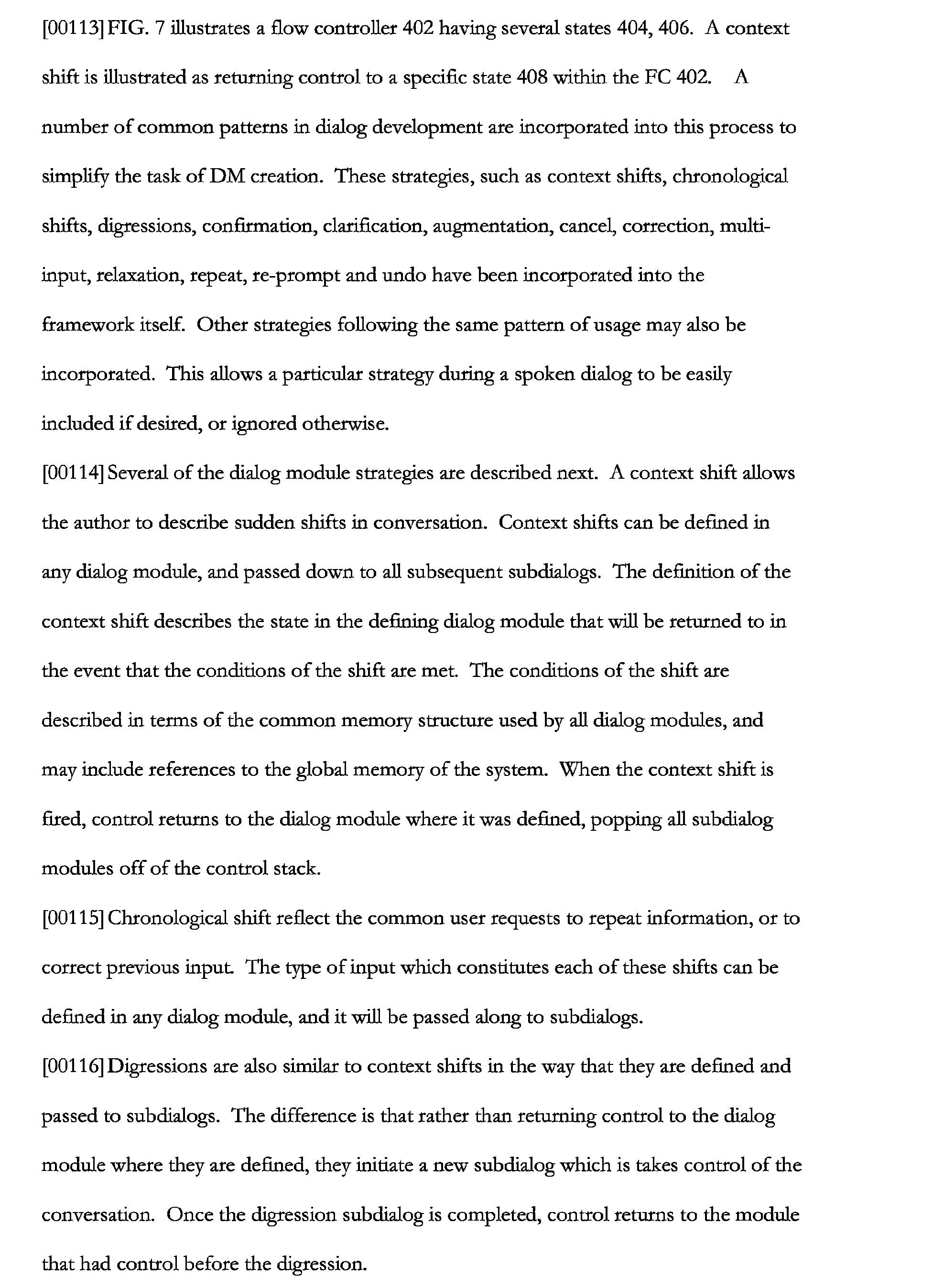

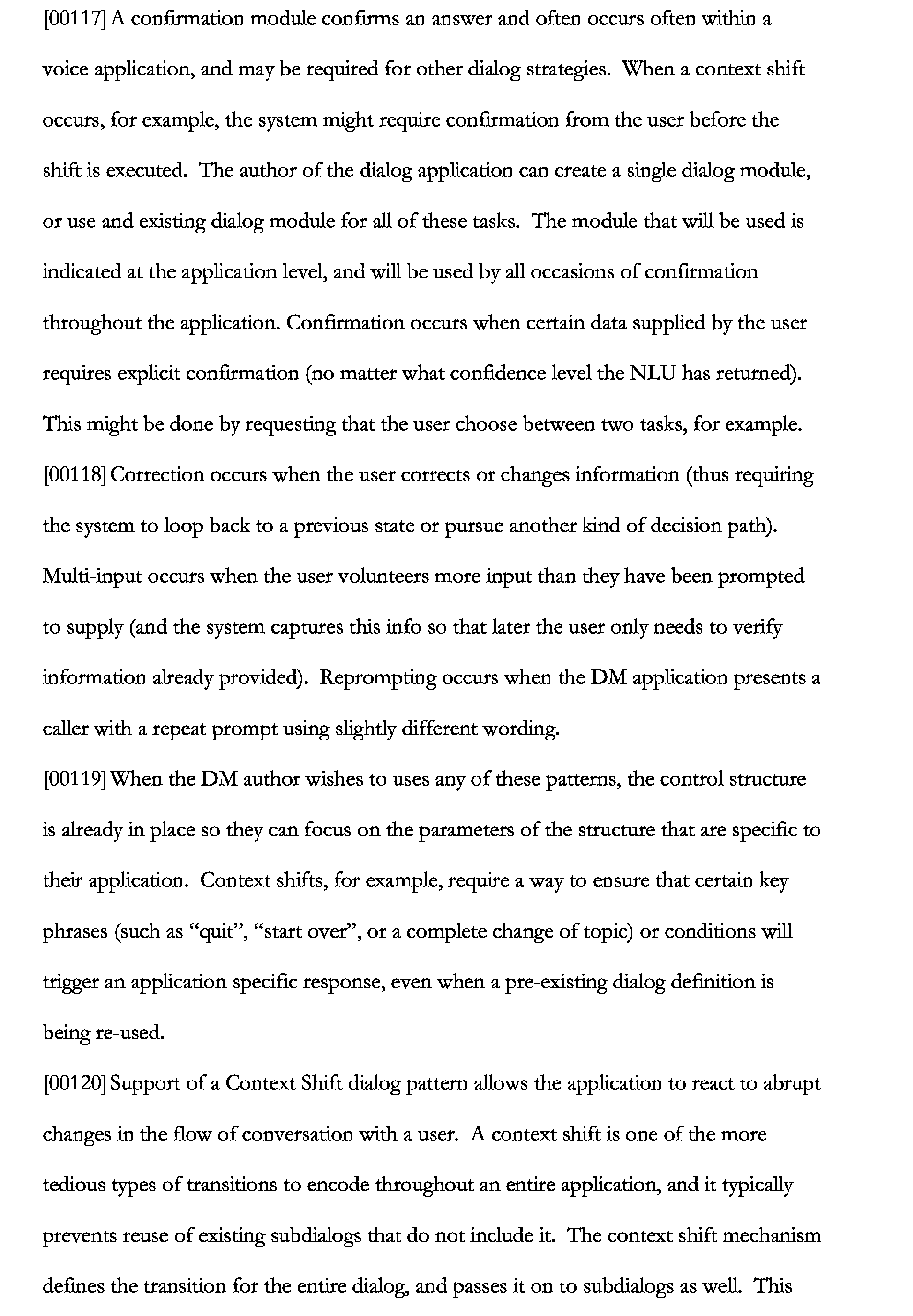

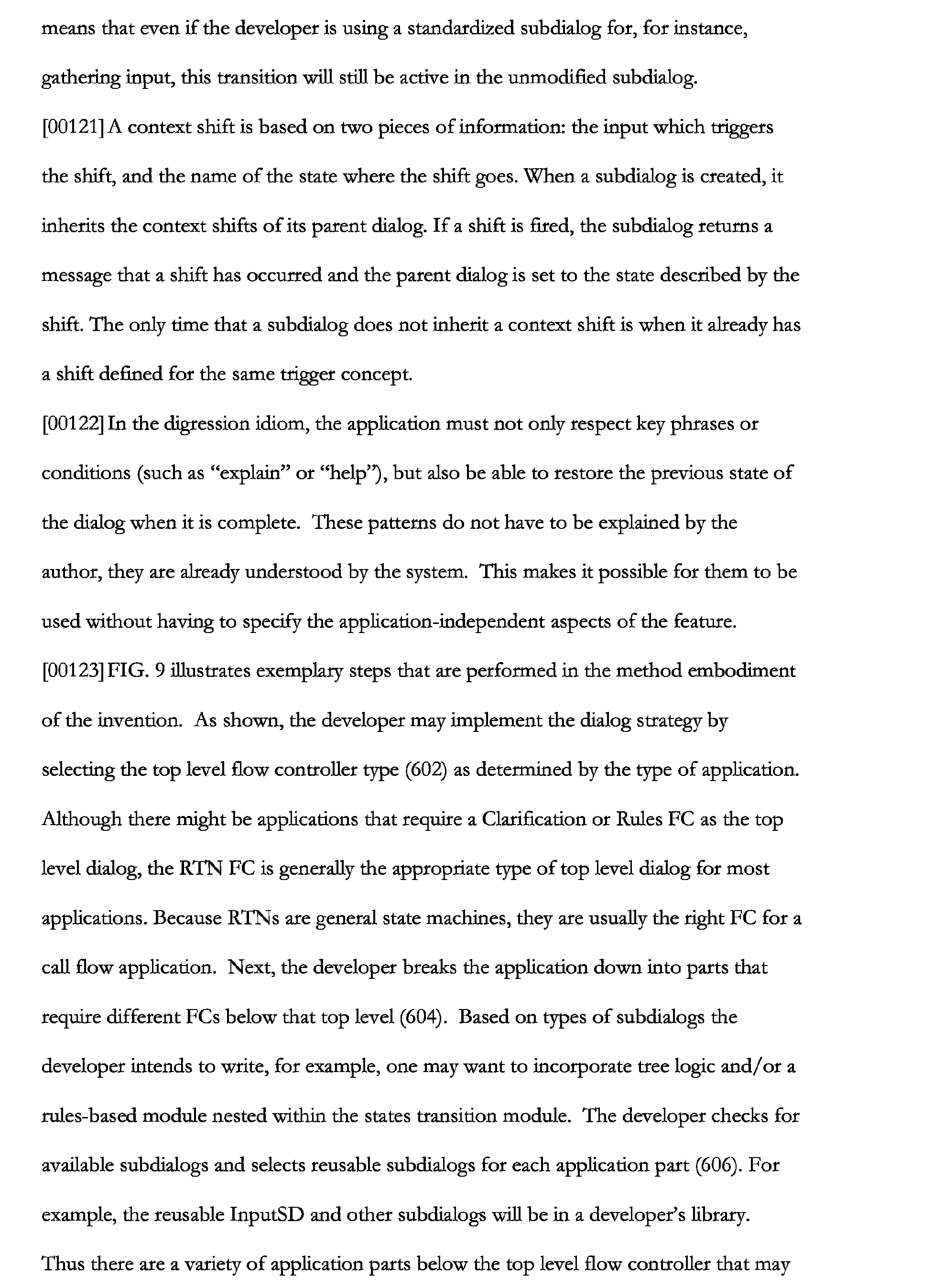

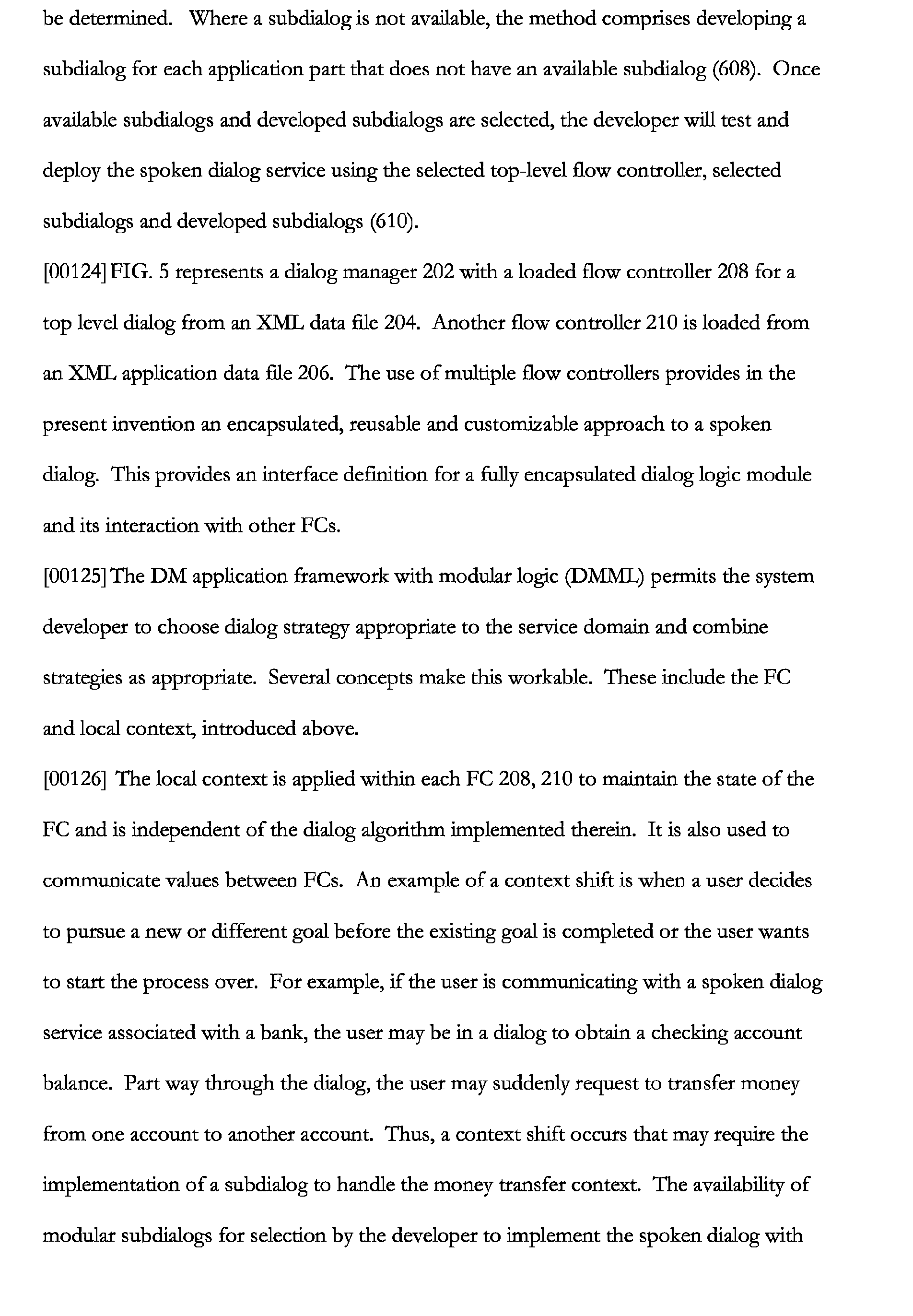

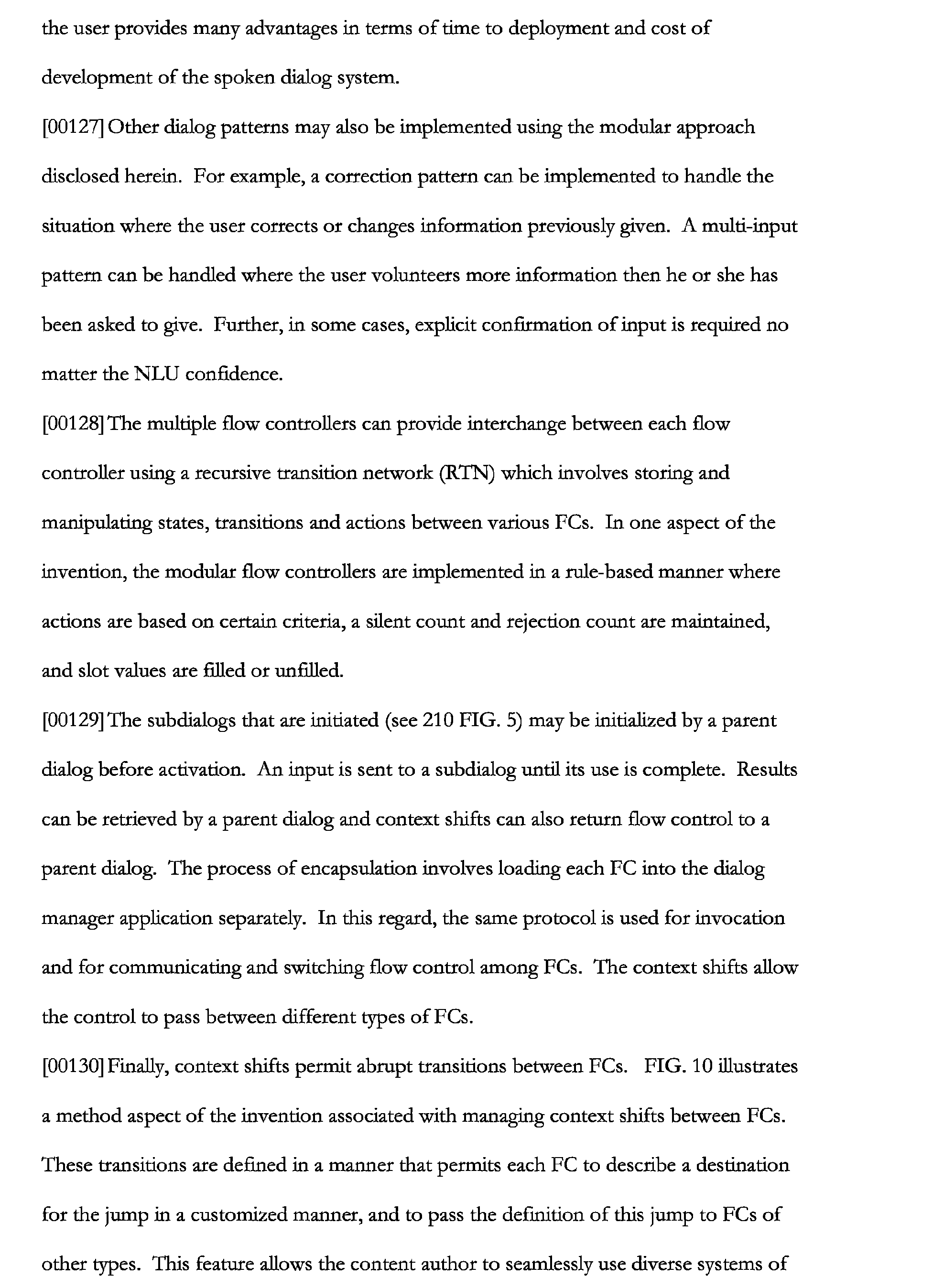

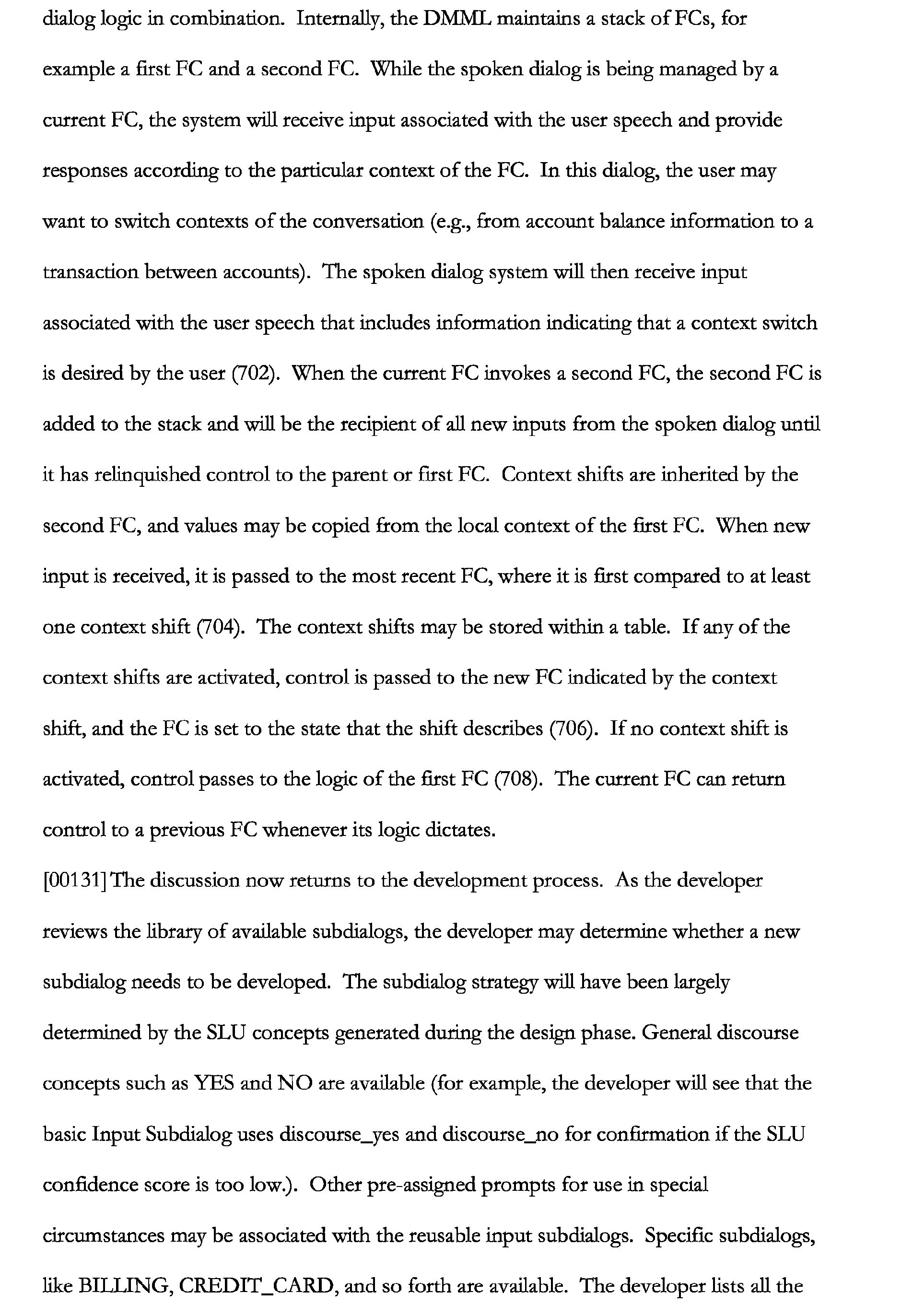

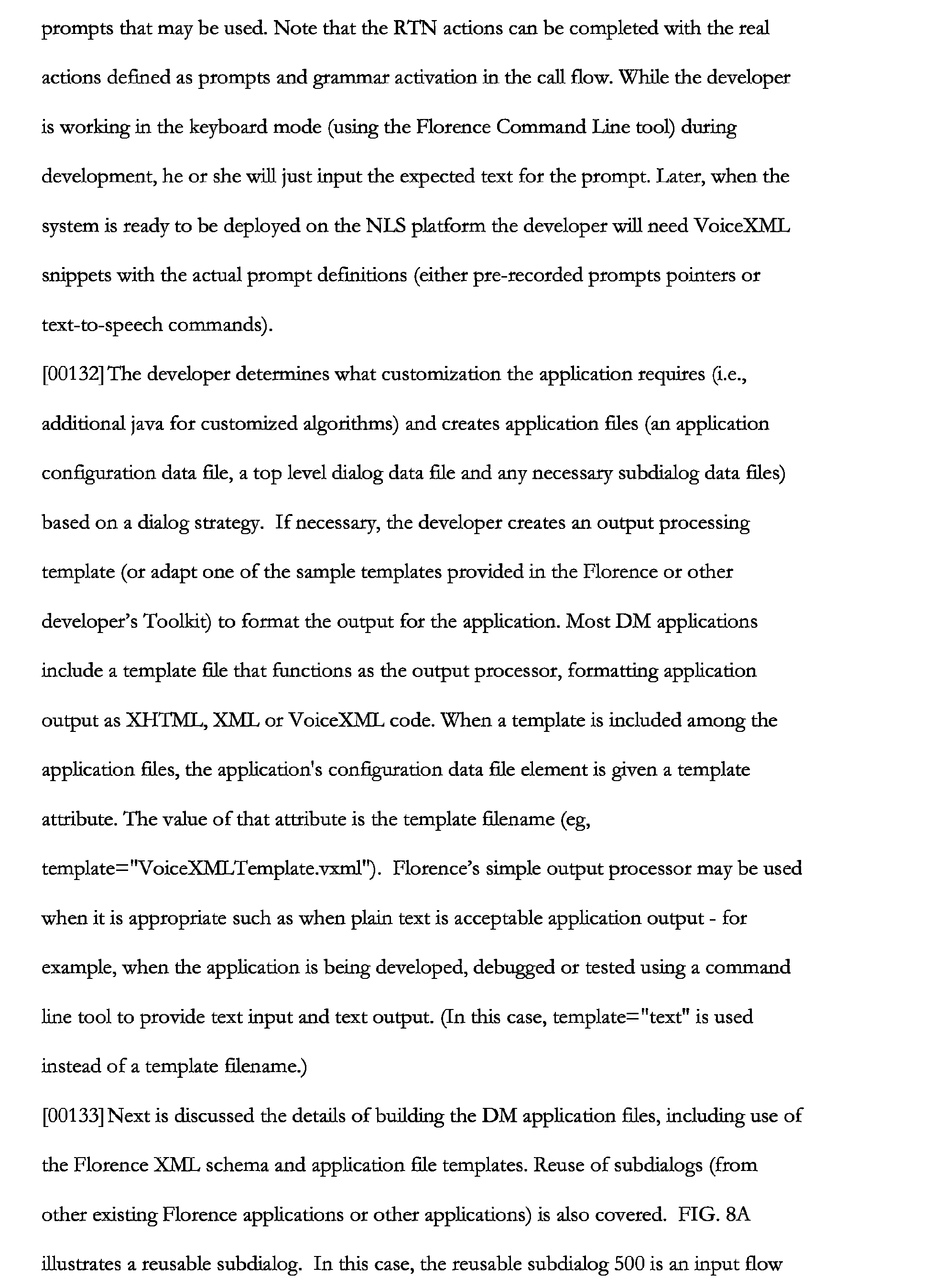

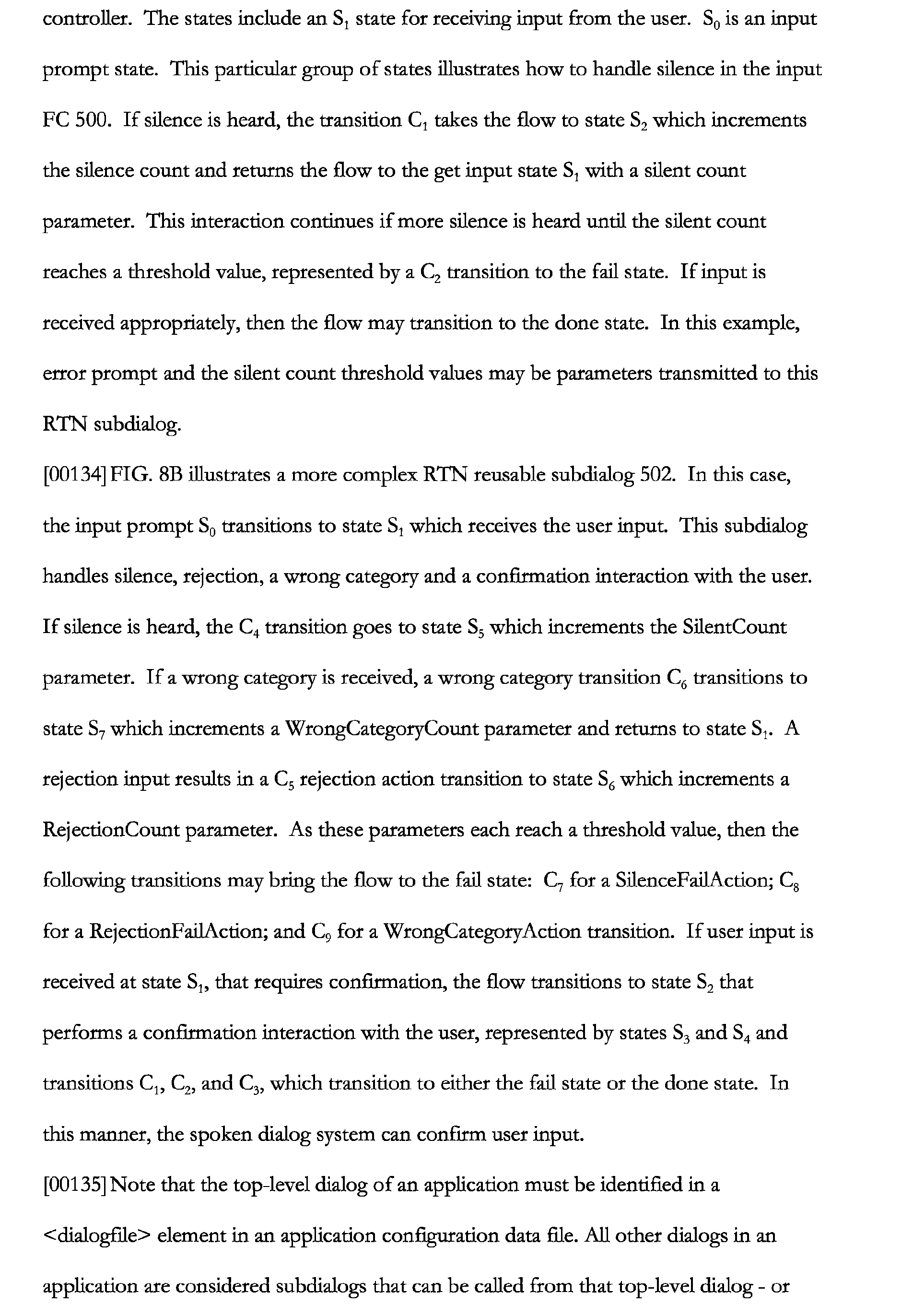

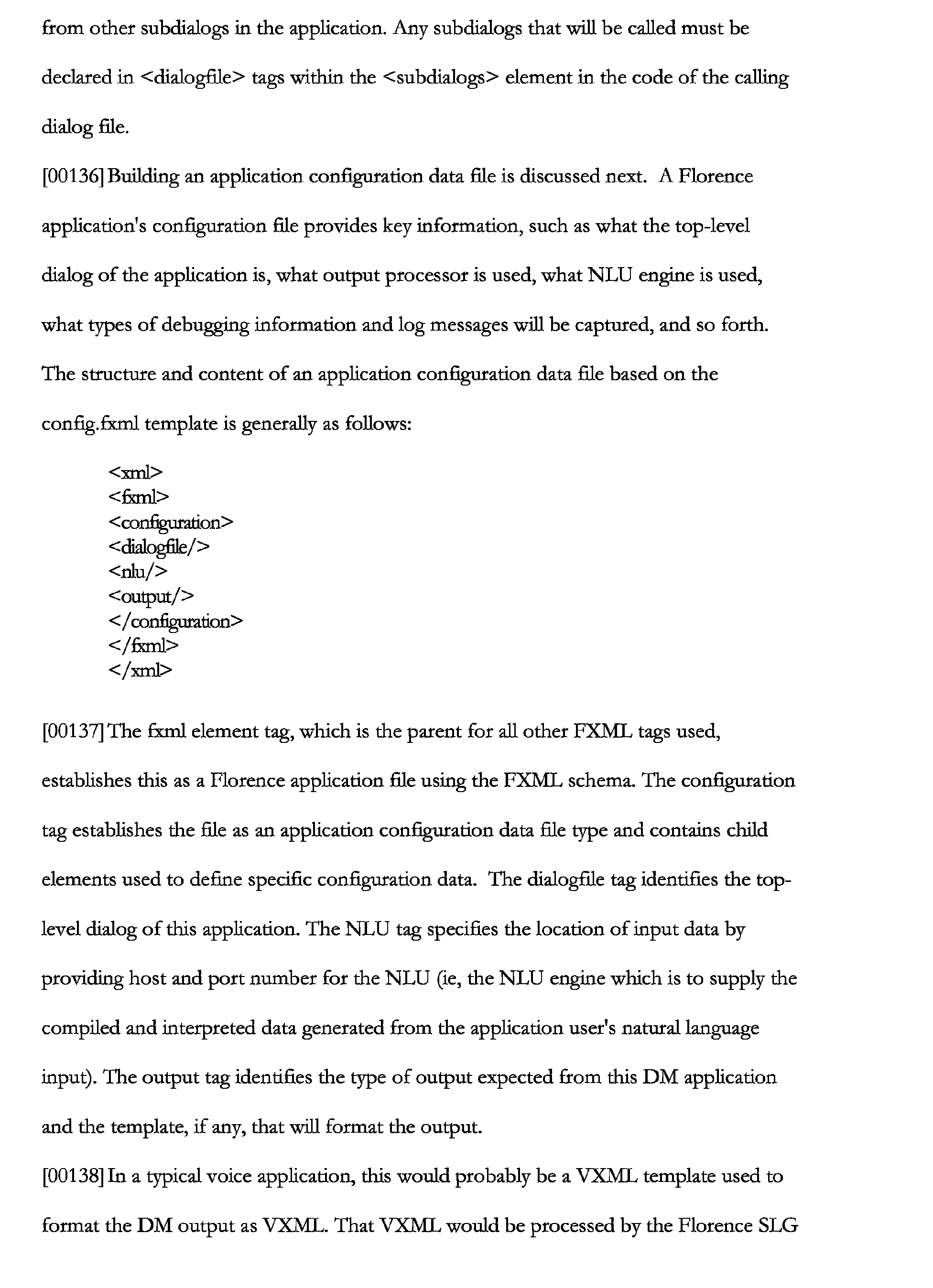

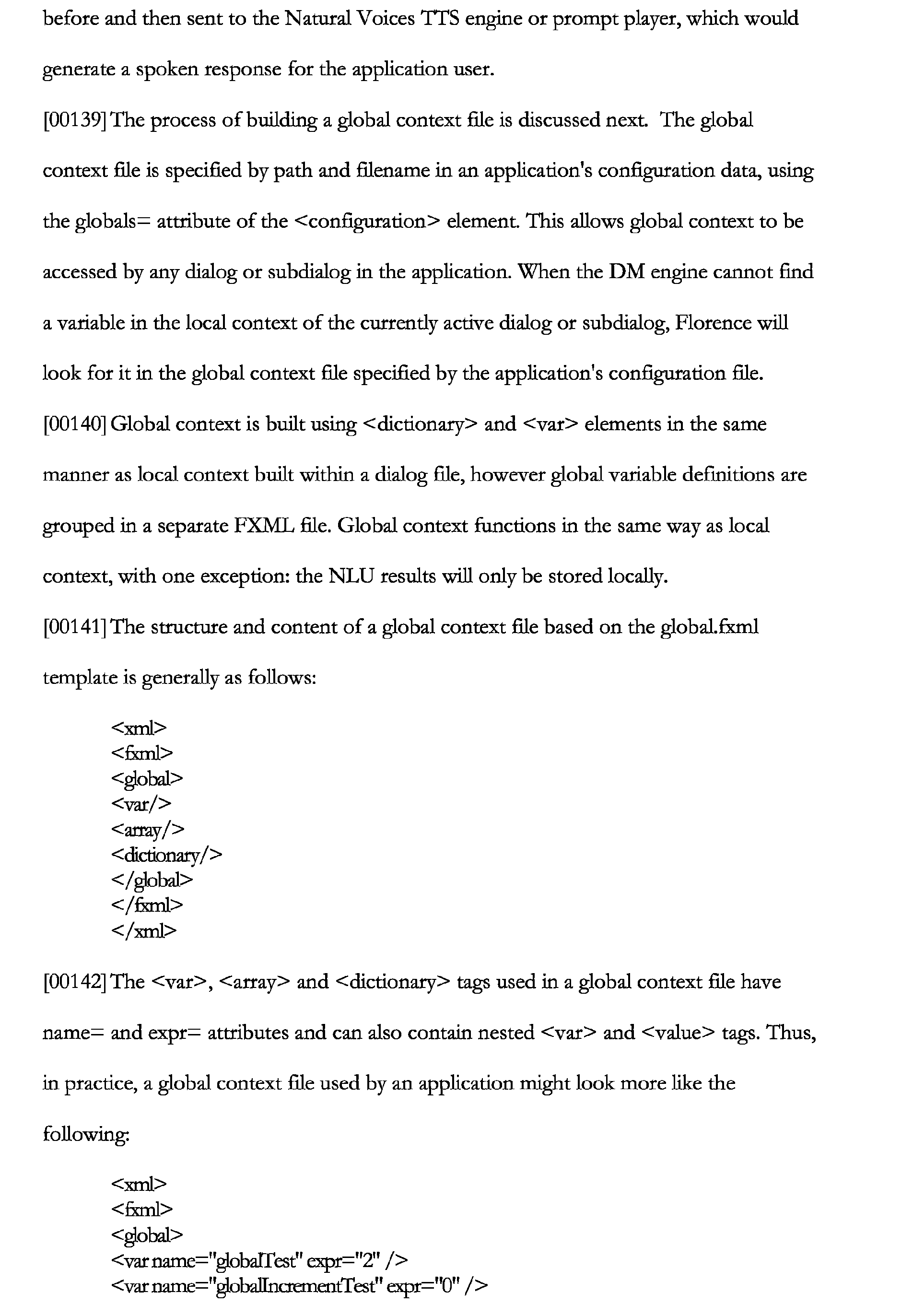

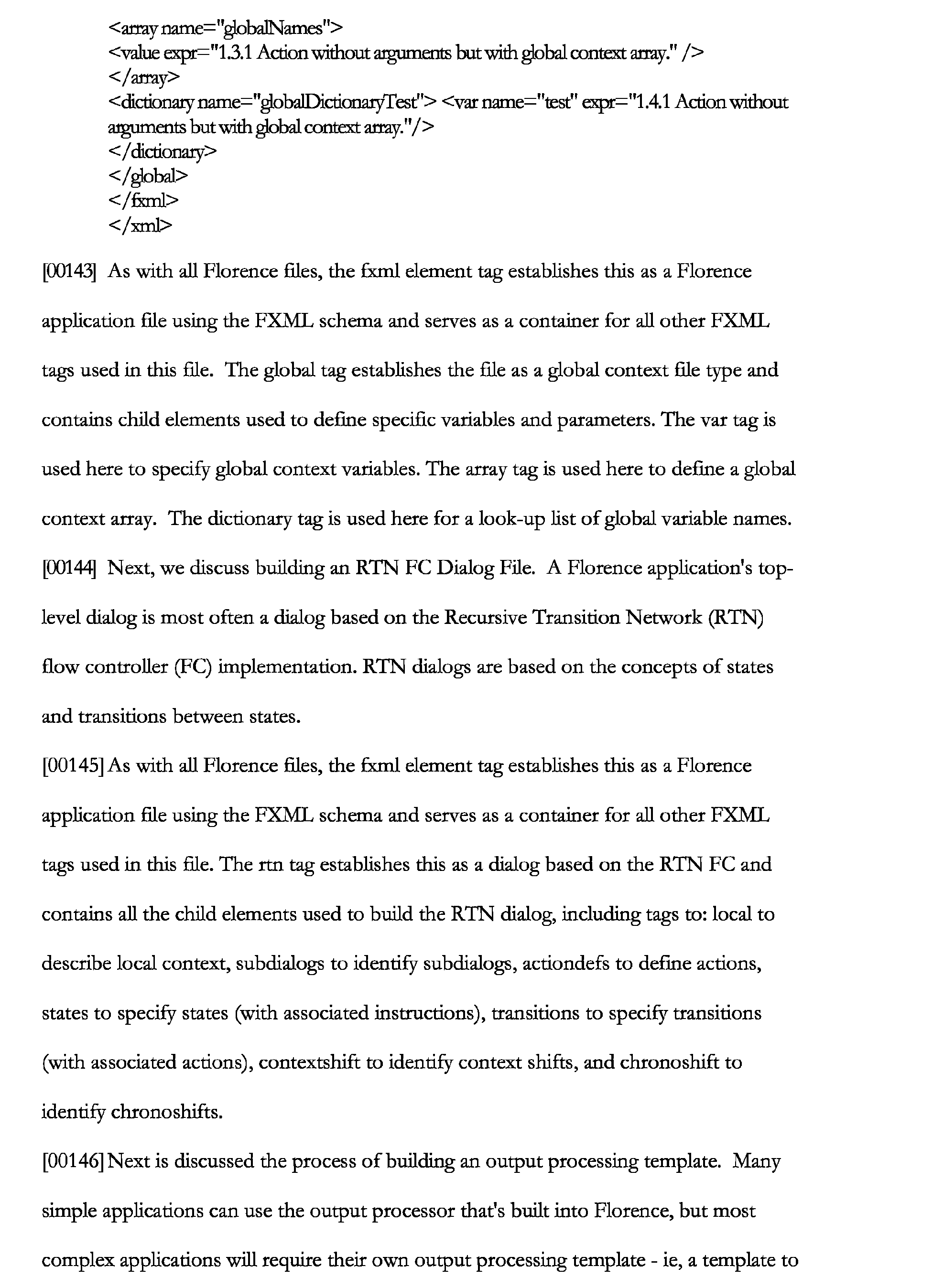

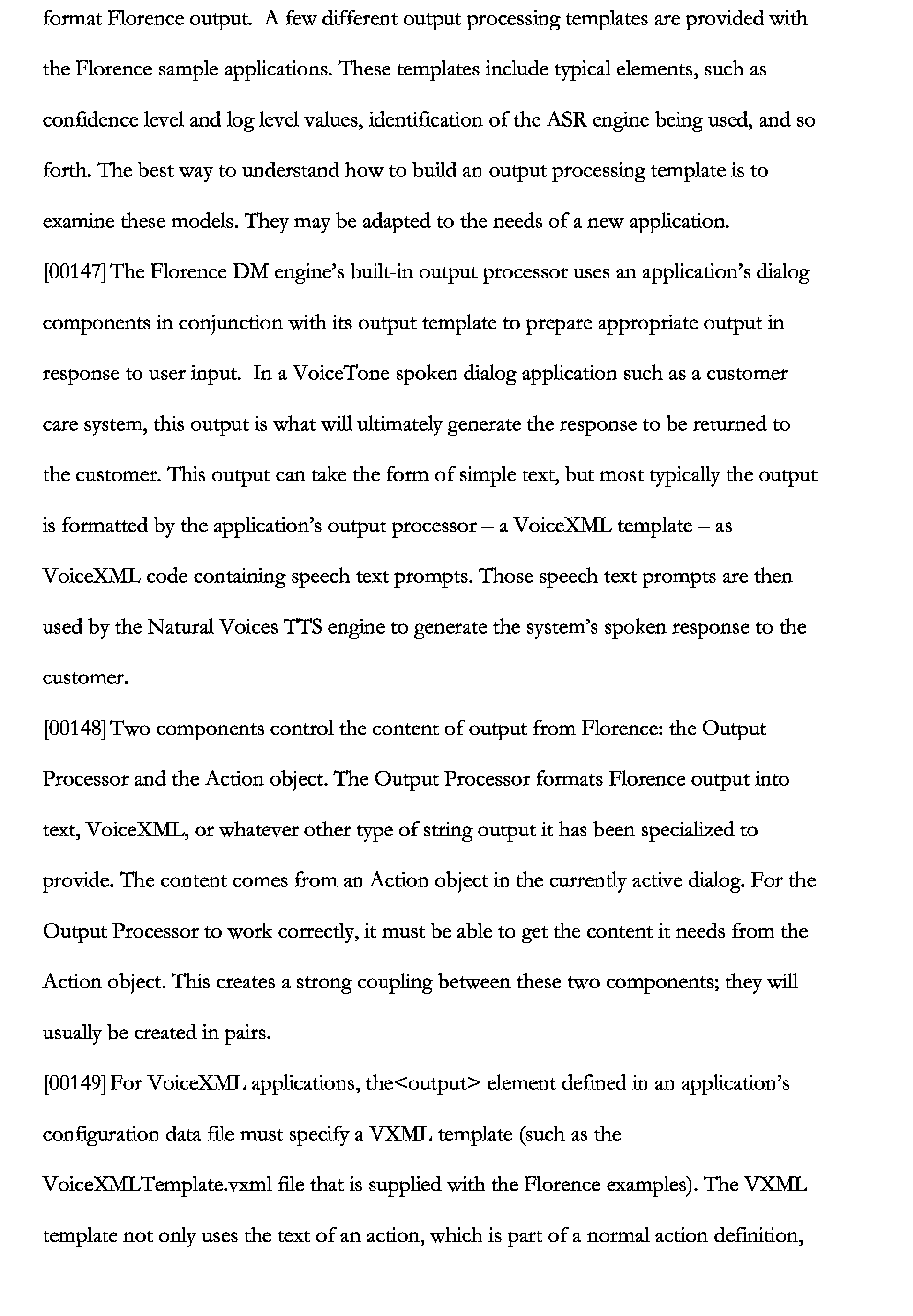

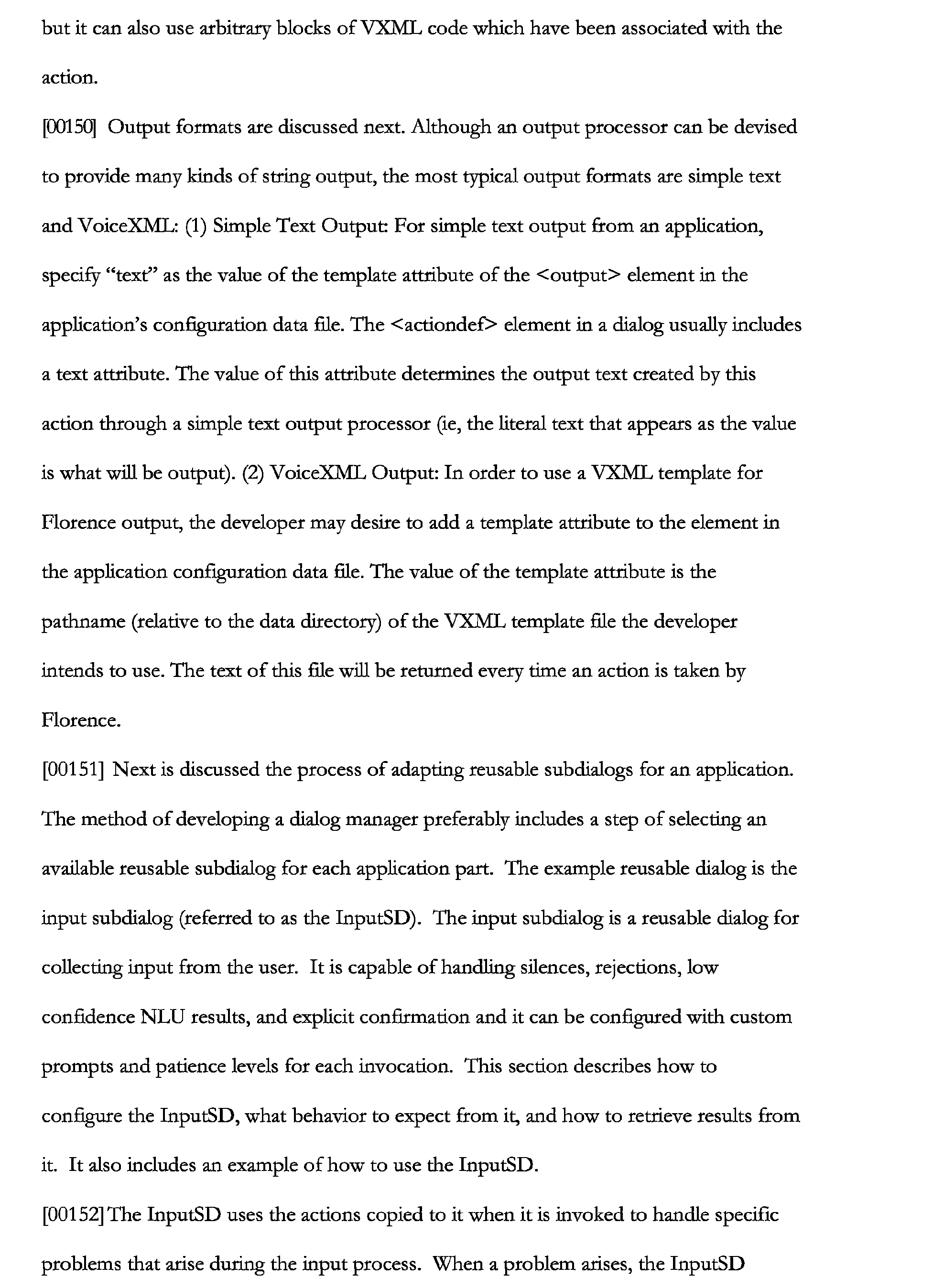

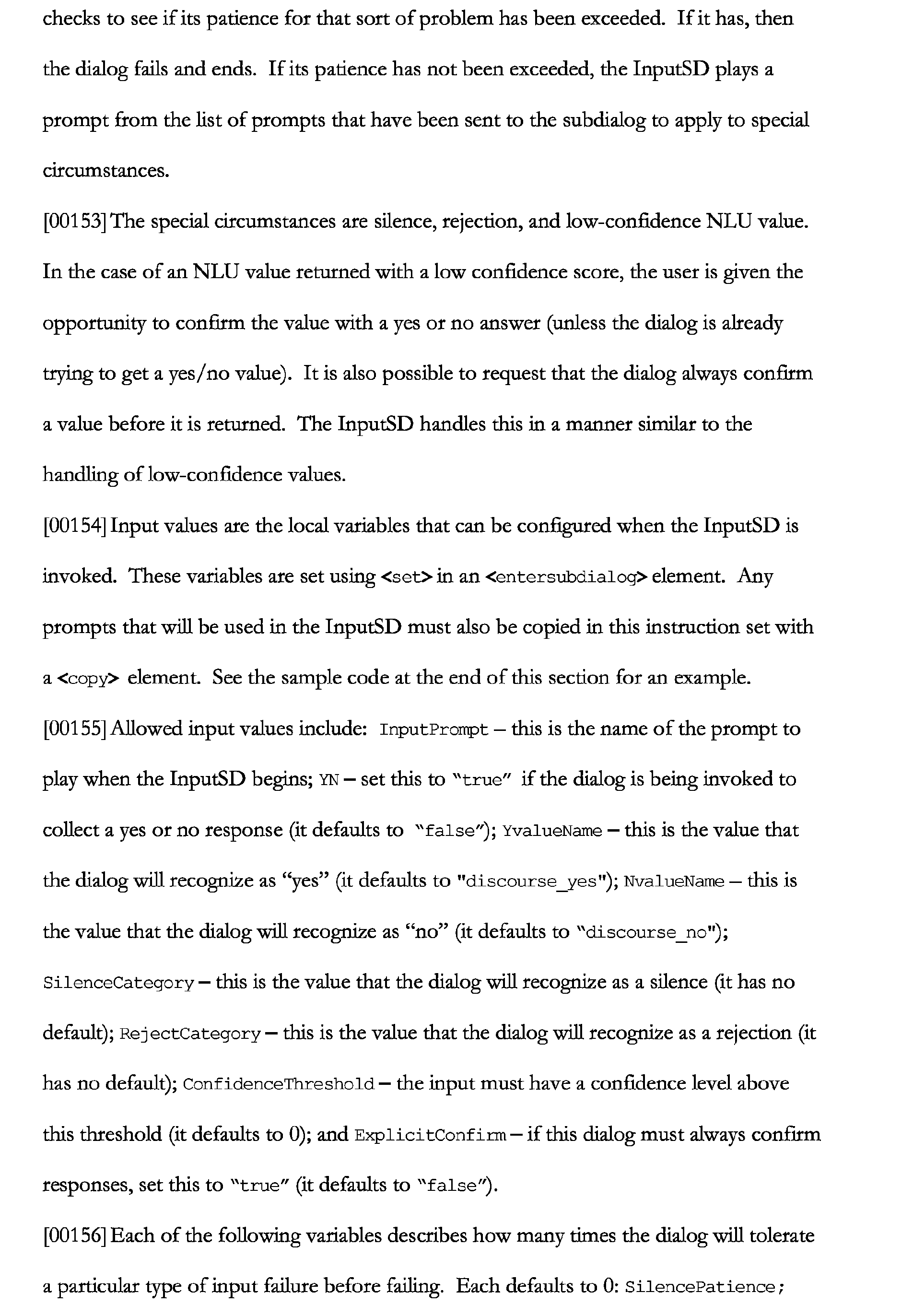

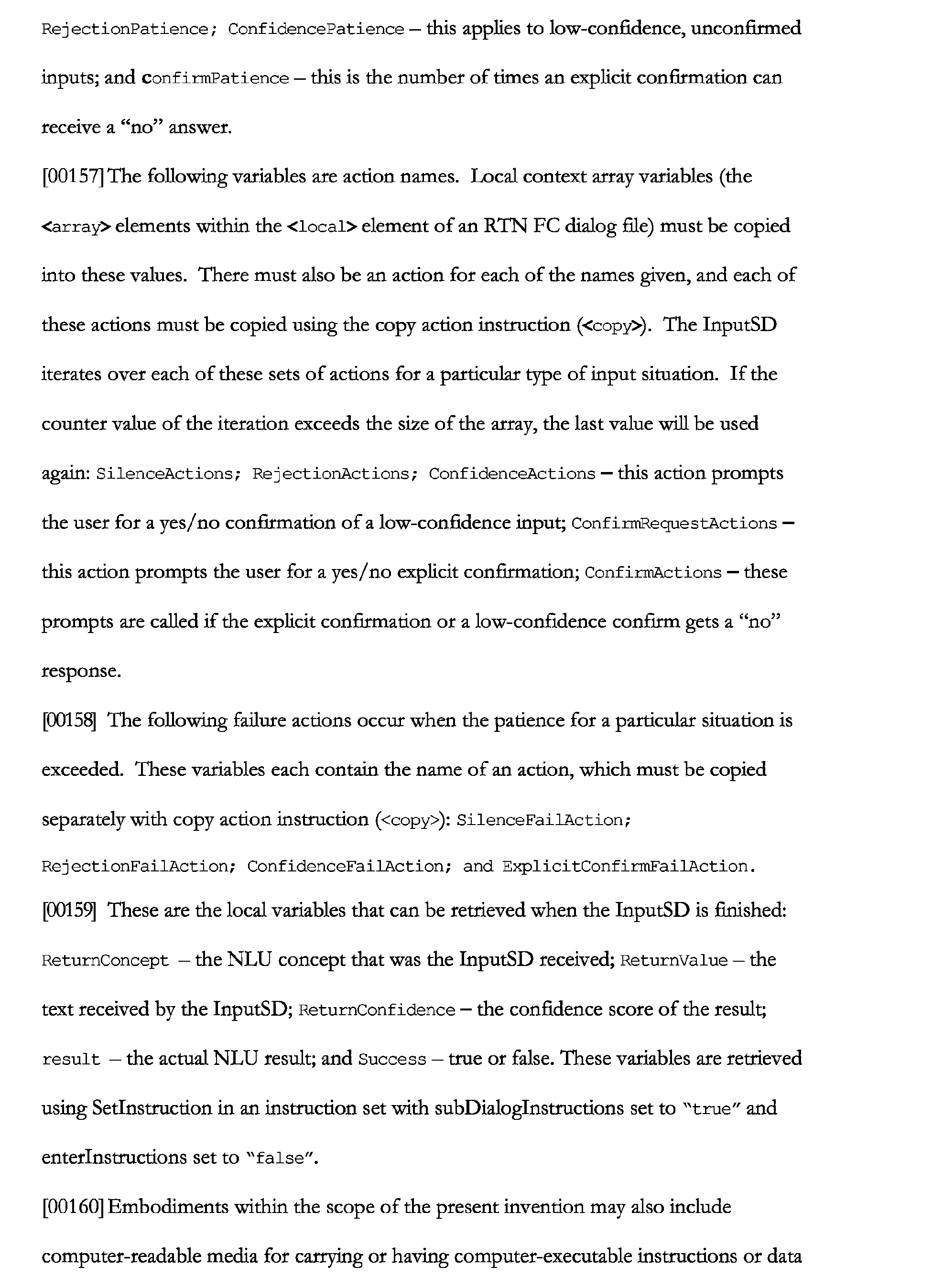

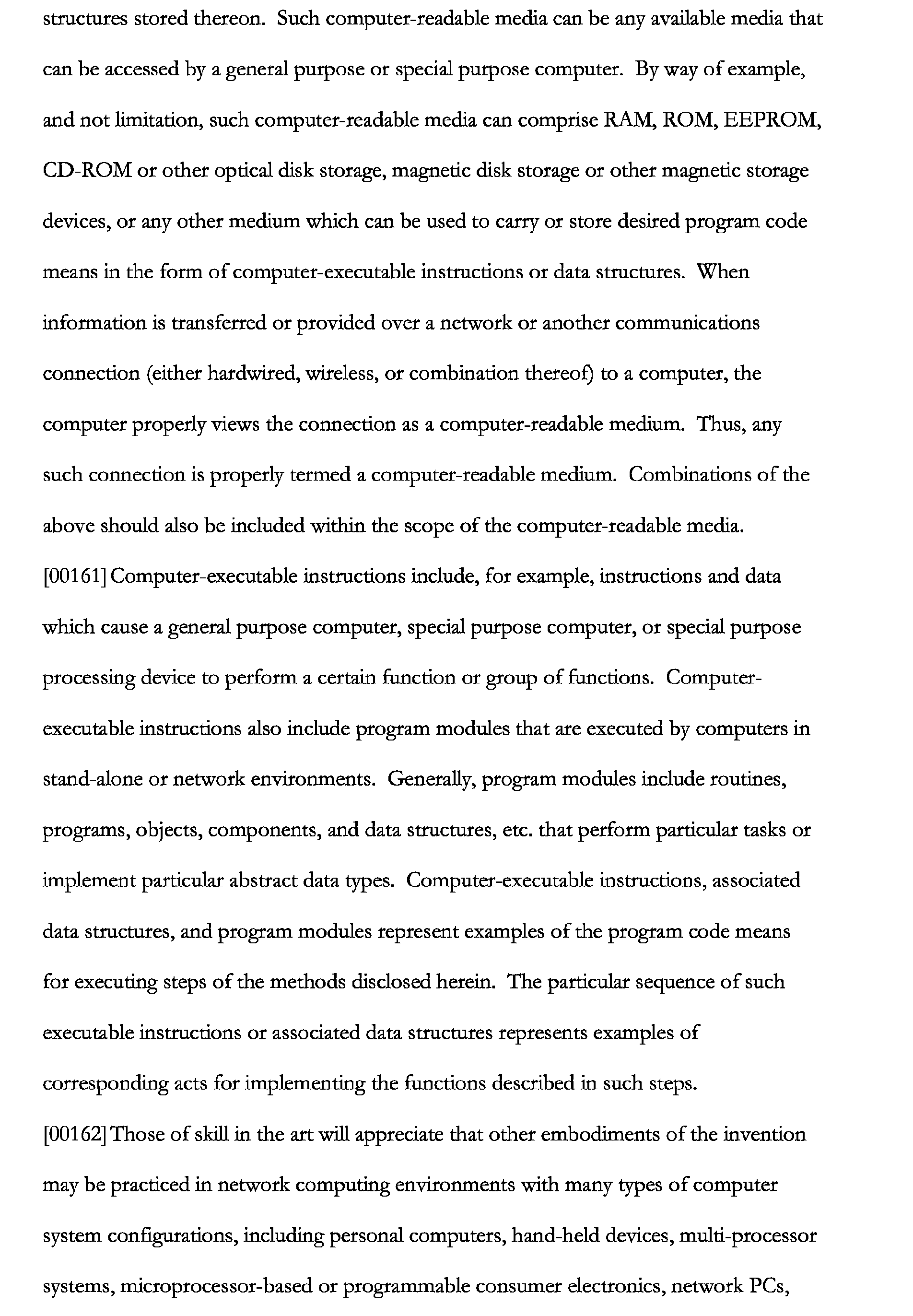

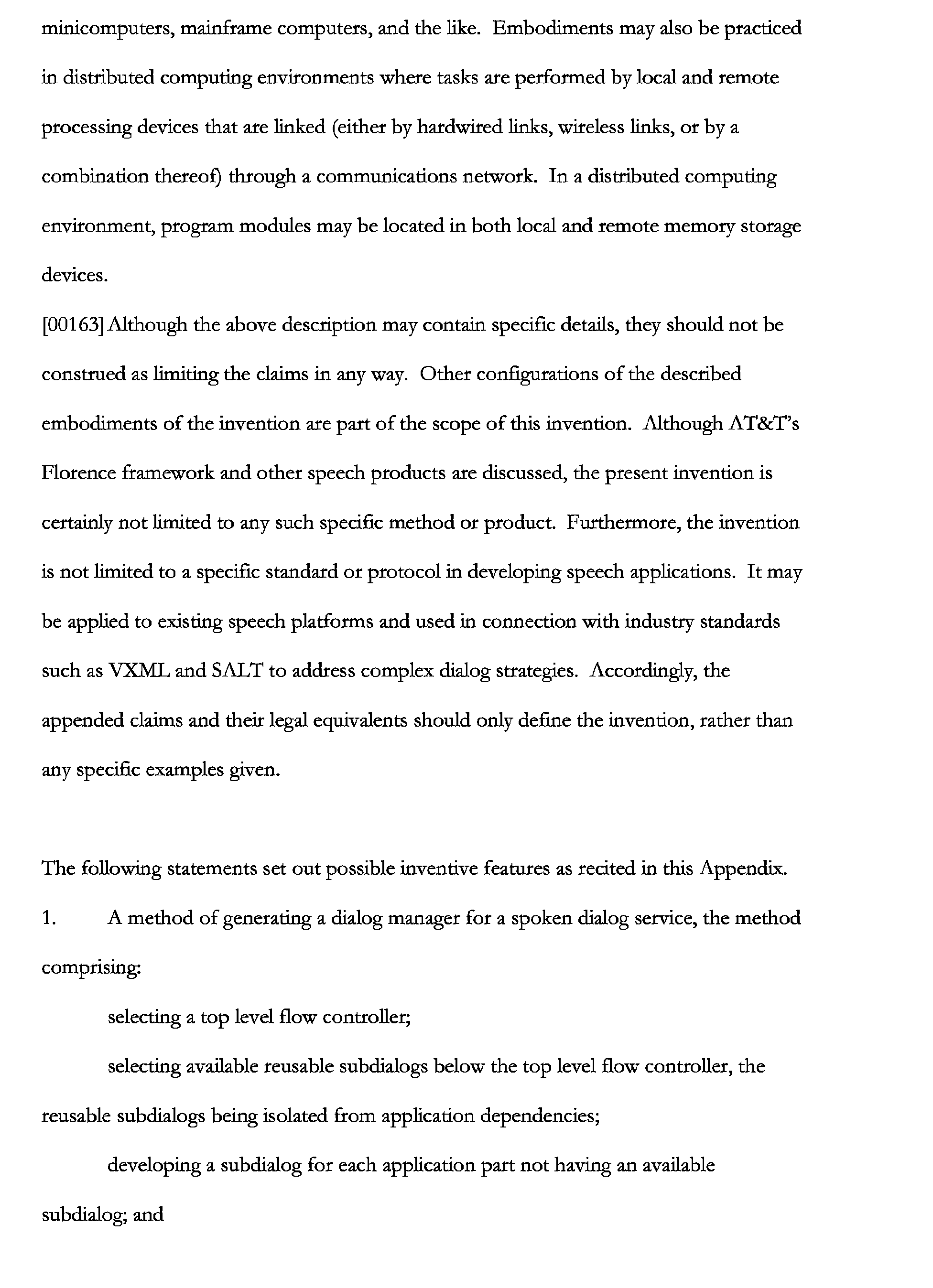

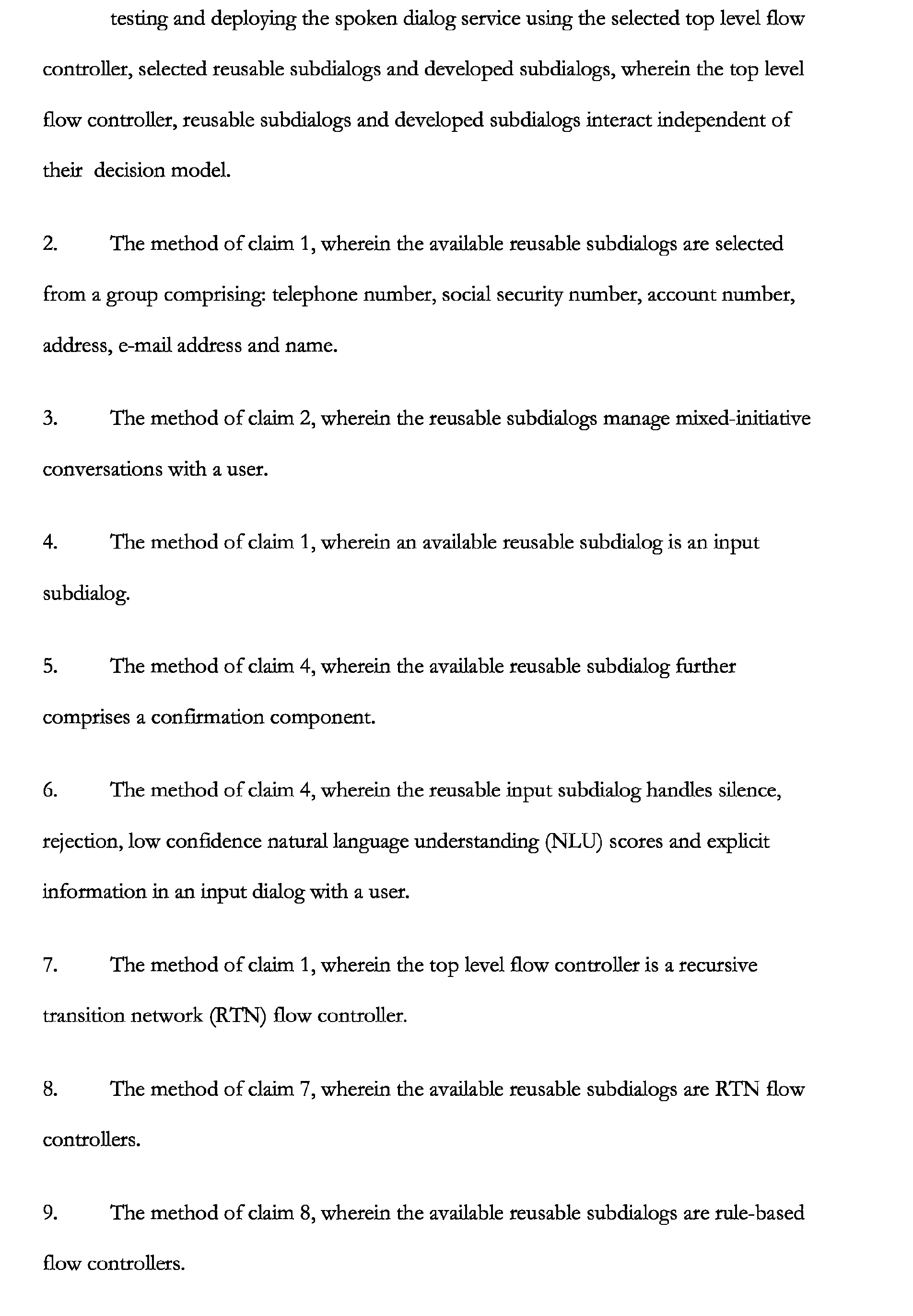

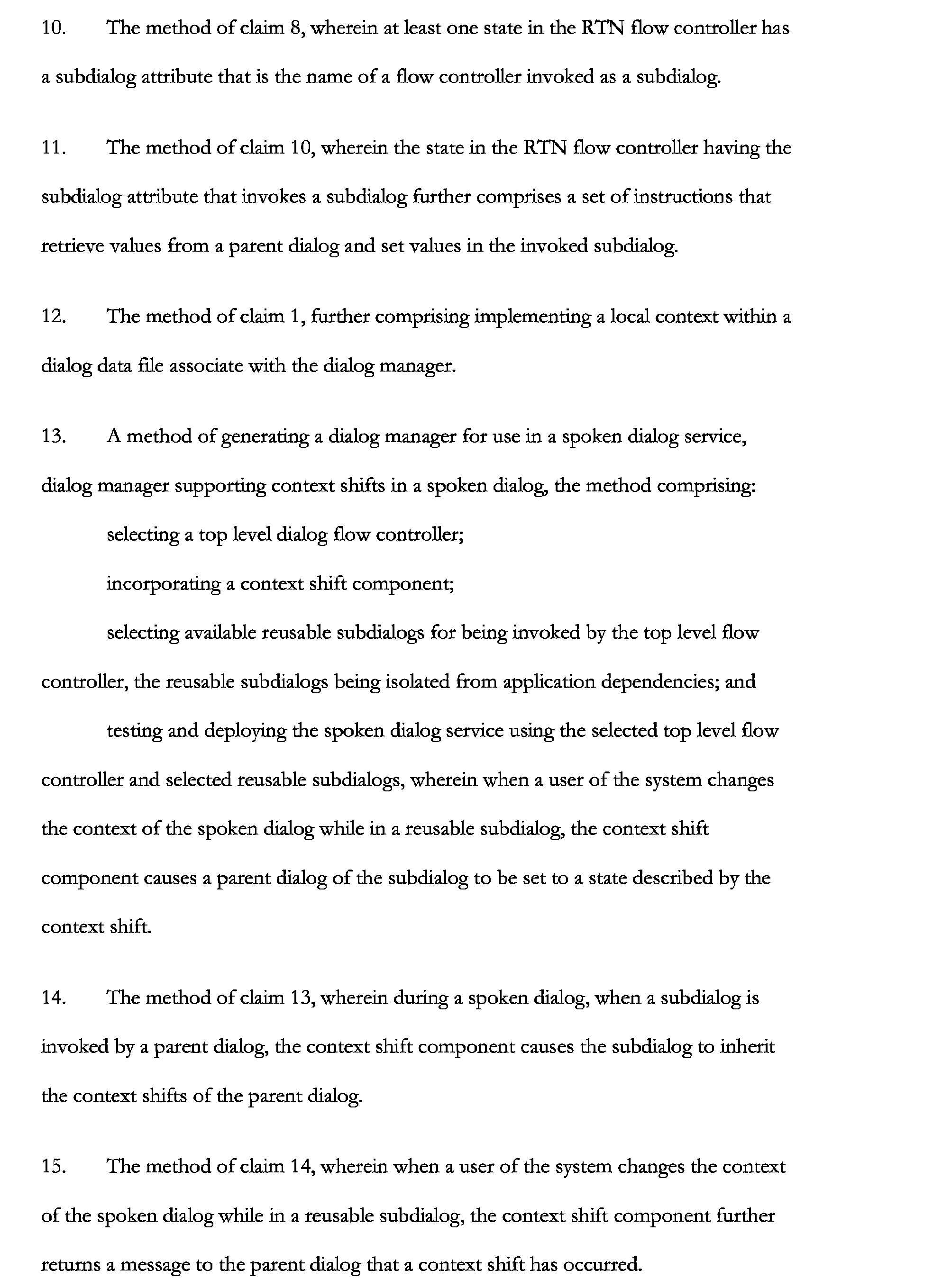

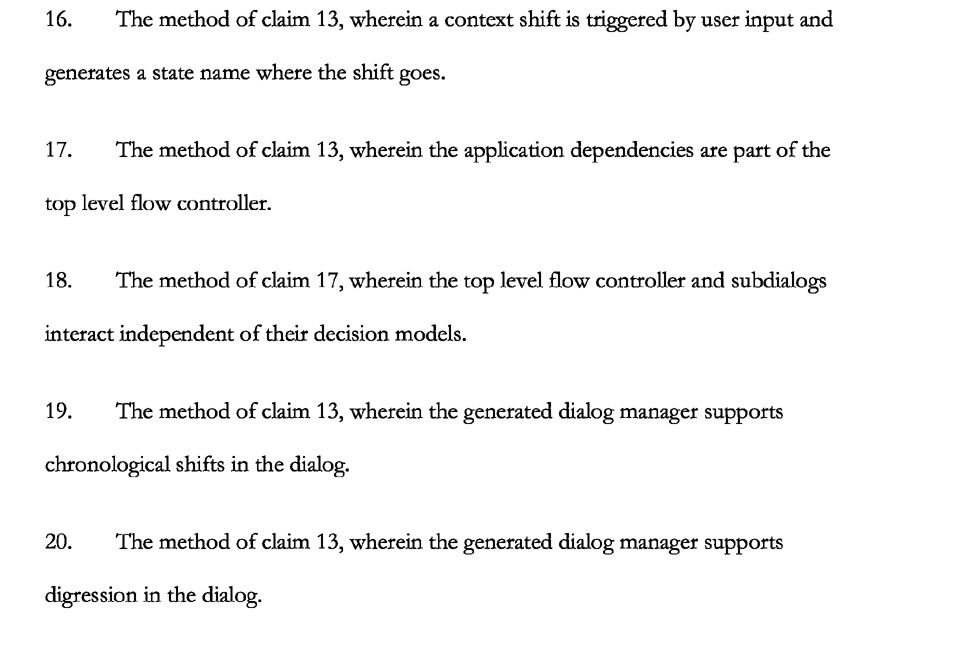

## Claims

1. A disambiguation method in a spoken dialog service that identifies a user need, the disambiguation method being associated with a rooted tree, the method comprising:
(a) based on a received user utterance in response to a prompt, establishing at least one lit node and assigning a current focus node;
(b) if there is a single direct descendent of the focus node that is lit:
(1) assigning the lit direct descendent of the current focus node as a new focus node;
(2) if the new focus node is a leaf node, identifying the user need; and
(3) if the new focus node is not a leaf node, prompting the user to disambiguate between descendent nodes of the new focus node and returning to step (a);
(c) if there is not a single direct descendent of the current focus node that is lit:
(1) assigning a lowest common ancestor node of all lit nodes as a new focus node;
(2) prompting the user for input to disambiguate between descendent nodes of the new focus node; and
(3) returning to step (a).

2. The method of claim 1, wherein if after step (a), only one lit node exists that is not a direct descendent of the focus node, and the one lit node is a leaf node, the method further comprises:
(d) identifying the user need according to the lit leaf node.

3. The method of claim 2, wherein if only one lit node exists that is not a direct descendent of the focus node and the one lit node is a leaf node, the method further comprises presenting information to the user regarding a condition of the lit leaf node.

4. The method of claim 1, 2 or 3, wherein a first prompt to the user is associated with a root node of a rooted tree.

5. A dialog manager within a spoken dialog service, the dialog manager operating according to a dialog disambiguation rooted tree, the rooted tree having a root node, nodes descending from the root nodes organized in categories and leaf nodes, the dialog manager performing the steps:
(a) gathering input from a user to match with at least one node and node condition, wherein a first prompt from the dialog manager relates to a focus root node;
(b) lighting at least one relevant node according to the received user input;
(c) generalizing by attempting to select a new focus node further from a current focus node by:
(1) assigning a node as a new focus node if it is the only lit direct descendent of a focus node after step (b); and
(2) assigning a lowest common ancestor node as a new focus node if there are multiple descendent nodes that are lit and step (c) (1) does not apply.

6. The dialog manager of claim 5, wherein step (c)(1) further comprises:
if the new focus node is a leaf node, identifying the user need; and
if the new focus nodes is not a leaf node, prompting the user to disambiguate between descendent nodes of the new focus node and returning to step (b).

7. The dialog manager of claim 6, wherein step (c)(2) further comprises:
prompting the user for input to disambiguate between descendent nodes of the new focus node; and
returning to step (b).

8. The dialog manager of claim 5, wherein if after step (b), only one lit node exists that is not a direct descendent of the focus node, and the one lit node is a leaf node, the method further comprises:
identifying the user need according to the lit leaf node.

9. The dialog manager of claim 8, wherein if only one lit node exists that is not a direct descendent of the focus node and the one lit node is a leaf node, the method further comprises presenting information to the user regarding a condition of the lit leaf node.

10. A method within a spoken dialog service for controlling a dialog flow using a dialog disambiguation rooted tree, the rooted tree having a root node, nodes descending from the root nodes organized in categories and leaf nodes, the method comprising:
(a) gathering input from a user to match with at least one node and node condition, wherein a first prompt from the dialog manager relates to a focus root node;
(b) lighting at least one relevant node according to the received user input;
(c) generalizing by attempting to select a new focus node further from a current focus node by:
(1) assigning a node as a new focus node if it is the only lit direct descendent of a focus node after step (b); and
(2) assigning a lowest common ancestor node as a new focus node if there are multiple descendent nodes that are lit and step (c)(1) does not apply.

11. The method of claim 10, wherein step (c)(1) further comprises:
if the new focus node is a leaf node, identifying the user need; and
if the new focus node is not a leaf node, prompting the user to disambiguate between descendent nodes of the new focus node and returning to step (b).

12. The method of claim 10, wherein if after step (b), only one lit node exists that is not a direct descendent of the focus node, and the one lit node is a leaf node, the method further comprises:
identifying the user need according to the lit leaf node.

13. The method of claim 12, wherein if only one lit node exists that is not a direct descendent of the focus node and the one lit node is a leaf node, the method further comprises presenting information to the user regarding a condition of the lit leaf node.

14. A spoken dialog service utilizing a disambiguation method associated with a rooted tree, the disambiguation method:
(a) based on a received user utterance in response to a prompt, establishing at least one lit node and assigning a current focus node;
(b) if there is a single direct descendent of the focus node that is lit:
(1) assigning the lit direct descendent of the current focus node as a new focus node;
(2) if the new focus node is a leaf node, identifying the user need; and
(3) if the new focus node is not a leaf node, prompting the user to disambiguate between descendent nodes of the new focus node and returning to step (a);
(c) if there is not a single direct descendent of the current focus node that is lit:
(1) assigning a lowest common ancestor node of all lit nodes as a new focus node;
(2) prompting the user for input to disambiguate between descendent nodes of the new focus node; and
(3) returning to step (a).

15. The spoken dialog service of claim 14, wherein if after step (a), only one lit node exists that is not a direct descendent of the focus node, and the one lit node is a leaf node, the method further comprises:
(d) identifying the user need according to the lit leaf node.

16. The spoken dialog service of claim 15, wherein if only one lit node exists that is not a direct descendent of the focus node and the one lit node is a leaf node, the method further comprises presenting information to the user regarding a condition of the lit leaf node.

17. The spoken dialog service of claim 14, 15 or 16, wherein a first prompt to the user is associated with a root node of a rooted tree.

18. A computer-readable medium storing computer readable instructions for instructing a computing device to perform a disambiguation method in a spoken dialog service that identifies user need, the disambiguation method being associated with a rooted tree, the method comprising.
(a) based on a received user utterance in response to a prompt, establishing at least one lit node and assigning a current focus node;
(b) if there is a single direct descendent of the focus node that is lit:
(1) assigning the lit direct descendent of the current focus node as a new focus node;
(2) if the new focus node is a leaf node, identifying the user need; and
(3) if the new focus node is not a leaf node, prompting the user to disambiguate between descendent nodes of the new focus node and returning to step (a);
(c) if there is not a single direct descendent of the current focus node that is lit:
(1) assigning a lowest common ancestor node of all lit nodes as a new focus node;
(2) prompting the user for input to disambiguate between descendent nodes of the new focus node; and
(3) returning to step (a).

19. The computer-readable medium of claim 18, wherein if after step (a), only one lit node exists that is not a direct descendent of the focus node, and the one lit node is a leaf node, the method further comprises:
(d) identifying the user need according to the lit leaf node.

20. The computer-readable medium of claim 19, wherein if only one lit node exists that is not a direct descendent of the focus node and the one lit node is a leaf node, the method further comprises presenting information to the user regarding a condition of the lit leaf node.

21. The computer-readable medium of claim 18, 19 or 20, wherein a first prompt to the user is associated with a root node of the rooted tree.
